(19) Europäisches Patentamt
European Patent Office
Office européen des brevets

(11) **EP 4 675 713 A1**

(12) **EUROPEAN PATENT APPLICATION**
published in accordance with Art. 153(4) EPC

(43) Date of publication:
**07.01.2026 Bulletin 2026/02**

(21) Application number: **24763770.5**

(22) Date of filing: **22.02.2024**

(51) International Patent Classification (IPC):
***H01M 4/66*** *(2006.01)* ***B32B 27/36*** *(2006.01)*
***C08J 5/18*** *(2006.01)* ***H01G 9/048*** *(2006.01)*
***H01G 11/68*** *(2013.01)*

(52) Cooperative Patent Classification (CPC):
**B32B 7/025; B32B 15/09; B32B 27/36; C08J 5/18; H01G 9/048; H01G 11/68; H01M 4/66;** Y02E 60/10

(86) International application number:
**PCT/JP2024/006463**

(87) International publication number:
**WO 2024/181289 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029449**
**28.02.2023 JP 2023029451**
**28.02.2023 JP 2023029452**
**30.11.2023 JP 2023202422**

(71) Applicant: **Toray Industries, Inc.**
**Tokyo 103-8666 (JP)**

(72) Inventors:
- **SENDAI,Toshihiro**
  **Otsu-shi, Shiga 520-8558 (JP)**
- **HIGASHIOJI, Takuji**
  **Otsu-shi, Shiga 520-8558 (JP)**
- **NITTA, Yuya**
  **Otsu-shi, Shiga 520-8558 (JP)**

(74) Representative: **Kador & Partner Part mbB**
**Corneliusstraße 15**
**80469 München (DE)**

(54) **CURRENT COLLECTOR, POLYESTER FILM, NEGATIVE-ELECTRODE CURRENT COLLECTOR, ELECTRIC POWER STORAGE ELEMENT, ELECTRIC VEHICLE, AND ELECTRIC MISSILE**

(57) The present invention addresses the problem of providing: a current collector in which it is possible to suppress the occurrence of voids caused by resin breakdown gases or the like that arise due to charging/discharging, etc., of a secondary battery, particularly when the current collector is used in a negative electrode; and a polyester film in which there is little occurrence of voids caused by breakdown gases or the like when charging/discharging is performed, particularly when the polyester film is used as a negative-electrode current collector. The means for solving the aforementioned problem is a current collector comprising a polyester film and a layer (M layer) that is composed of metal and/or a metal-based compound, the maximum reduction current peak intensity of the current collector in CV measurement (0.01-2.0 V, 10 cycles) being 0.000 mA/cm$^2$ to 0.050 mA/cm$^2$ inclusive.

Figure 1

1
Current
(mA)
0
-0.1
3
5
6
4
0
2
Voltage (v.s.Li+/Li)
(V)
2

EP 4 675 713 A1

## Description

TECHNICAL FIELD

The present invention relates to a current collector, a polyester film, a negative electrode current collector, an electrical storage element, a secondary battery, an electric vehicle, and an electric flying object.

BACKGROUND ART

In recent years, there has been an earnest demand for the reduction of carbon dioxide emissions for the purpose of environmental protection. In the automotive industry, expectations are rising for the reduction of carbon dioxide emissions through the introduction of electric vehicles (EVs) and hybrid electric vehicles (HEVs), and active development efforts are underway for secondary batteries for motor drives, which are considered the key to their practical application. Examples of secondary batteries include lithium ion batteries, which can realize high energy density and high power density, as well as other next generation batteries such as lithium negative electrode batteries, which incorporate metallic lithium negative electrodes, all-solid-state batteries, and air batteries. In other industries than automobile manufacturing, efforts are underway toward the development of next generation mobility technologies, such as drones, flying cars, and airborne communication base stations, and there is a strong demand for lightweight secondary batteries with high energy density.

In secondary batteries such as lithium ion batteries, metal foils (metal current collector foils) have been used conventionally as current collectors, but in recent years, film current collector foils made of resin films instead of metal foils have been proposed. Resin film current collectors are lighter than metal current collector foils and are expected to serve for developing batteries with increased output per unit weight.

For example, Patent documents 1 to 3 disclose dispersants for resin current collectors, materials for resin current collectors containing resin and conductive filler, and resin current collectors containing such materials for resin current collectors.

PRIOR ART DOCUMENTS

PATENT DOCUMENTS

Patent document 1: International Publication WO 2015/005116
Patent document 2: Japanese Unexamined Patent Publication (Kokai) No. 2020-102386
Patent document 3: Japanese Unexamined Patent Publication (Kokai) No. 2020-68085

SUMMARY OF INVENTION

PROBLEMS TO BE SOLVED BY THE INVENTION

Specifically, Patent documents 1 to 3 disclose resin current collectors that use polyolefin films, but when resin current collectors using polyester films were fabricated with reference to these documents for the purpose of examining their properties such as heat resistance, it was found that voids occurred due to decomposition gases from the resin used as material for current collectors in secondary batteries, resulting in durability problems of the batteries.

The main object of the present invention is to provide a current collector that, particularly when used in a negative electrode, is less prone to void formation likely to be caused by resin decomposition gases etc. generated, for example, during charging and discharging of the secondary battery and also provide a polyester film that, particularly when used in a negative electrode current collector, is less prone to void formation likely to be caused by decomposition gases etc. generated, for example, during charging and discharging.

MEANS OF SOLVING THE PROBLEMS

To solve the above problems, an embodiment of the present invention adopts the following constitution.

[I] A current collector including a layer made of a metal and/or a metal based compound (M layer) and a polyester film and exhibiting a maximum reduction current peak intensity of 0.000 mA/cm$^2$ or more and 0.050 mA/cm$^2$ or less in CV measurement (0.01 V to 2.0 V, 10 cycles).

[Procedure of CV measurement]

CV measurement is performed in the steps (i) to (iii) described below to determine the maximum reduction current peak intensity.

(i) Preparation of 2032 type coin cell

A copper metal layer is formed by sputtering on the surface of a current collector and a disk-like sample with a diameter of 16 mm is punched out. On the surface of the copper metal layer of the punched sample, a polyethylene separator with a diameter of 18 mm, a metallic lithium foil with a diameter of 16.1 mm, and two stainless steel plates (SUS304) are stacked in this order, and they are sealed with an electrolytic solution as described below to fabricate a 2032 type coin cell. During this procedure, the other surface of the current collector, which is opposite to the surface covered by the aforementioned polyethylene separator, is maintained in contact with the casing of the 2032 type coin cell.

(Components of electrolytic solution)

- Electrolyte substance: 1 mol/L lithium hexafluorophosphate ($LiPF_6$)
- Solvent: A 1:1 (by volume) liquid mixture of ethylene carbonate (EC) and diethylene carbonate (DEC)
- Preparation environment: Preparation is performed in an argon gas circulation type glove box with a dew point of -70°C or less and an oxygen concentration of 10 ppm by volume or less.

(ii) CV measurement

The 2032 type coin cell prepared in the aforementioned step (i) is subjected to cyclic voltammetry measurement conducted under the following conditions using a VSP instrument manufactured by Biologic. Potential sweep operation is performed assuming that the redox potential of lithium metal is 0 V as reference, and the current value (mA) is observed and divided by the sample area (2.01 $cm^2$) to determine the current per unit area ($mA/cm^2$).

(Measuring conditions)

- Test temperature: 25°C
- Potential sweep range: 0.01 to 2.0 V (vs. $Li^+/Li$)
- Sweep rate: 1 mV/s
- Number of cycles: 10 cycles

(iii) Maximum reduction current peak intensity

The measurements of the current per unit area ($mA/cm^2$) obtained in the aforementioned step (ii) are compared among them, and the one with the largest absolute value is adopted as the maximum reduction current peak intensity ($mA/cm^2$).

[II] A current collector as set forth in paragraph [I], including at least one layer that contains, as main component, a polyester resin (resin $\alpha$) that incorporates a dicarboxylic acid component and a diol component having 3 or more and 16 or less carbon atoms.
[III] A current collector as set forth in either paragraph [I] or [II], wherein M layers are present on both surfaces of the polyester film.
[IV] A current collector as set forth in any one of paragraphs [I] to [III], wherein M layers are present on both surfaces of the polyester film and at least the M layer on either surface contains copper element.
[V] A current collector as set forth in any one of paragraphs [II] to [IV], wherein M layers are present on both surfaces of the polyester film; at least the M layer on either surface contains copper element; and the layer containing copper element is in contact with the layer containing the resin $\alpha$ as main component.
[VI] A current collector as set forth in paragraph [I], including at least one layer that contains, as main component, a polyester resin (resin $\beta$) that incorporates a diol component and a dicarboxylic acid component having 9 or more and 16 or less carbon atoms.

[VII] A current collector as set forth in paragraph [VI], wherein M layers are present on both surfaces of the polyester film; at least the M layer on either surface contains copper element; and the layer containing copper element is in contact with the layer containing the resin β as main component.
[VIII] A current collector satisfying the requirements (1) and (2) given below:

(1) at least one surface layer of the polyester film is a layer (P1 layer) that contains, as main component, a polyester resin (resin α) incorporating a dicarboxylic acid component and a diol component having 3 or more and 16 or less carbon atoms or contains, as main component, a polyester resin (resin β) incorporating a diol component and a dicarboxylic acid component having 9 or more and 16 or less carbon atoms; and
(2) layers (M layers) each containing a metal and/or a metal based compound are present on both surfaces of the polyester film.

[IX] A current collector as set forth in paragraph [VIII], wherein at least the M layer on either surface is in contact with the P1 layer, and the M layer in contact with the P1 layer is a layer containing copper element.
[X] A current collector as set forth in any one of paragraphs [I] to [VIII], wherein the thickness of the M layer is 0.1 μm or more and 5.0 μm or less.
[XI] A current collector as set forth in any one of paragraphs [I] and [VIII] to [X], wherein the main component of the polyester film is any one of polycyclohexadimethylene terephthalate, polybutylene terephthalate, and polyethylene naphthalate.
[XII] A current collector as set forth in paragraph [XI], wherein the main component of the polyester film is either polycyclohexadimethylene terephthalate or polybutylene terephthalate.
[XIII] A current collector as set forth in paragraph [I] or [VIII], wherein the polyester film has a layer (P1 layer) that includes, as main component, a polyester resin (resin α) incorporating a dicarboxylic acid component and a diol component having 3 or more and 16 or less carbon atoms or includes, as main component, a polyester resin (resin β) incorporating a diol component and a dicarboxylic acid component having 9 or more and 16 or less carbon atoms and further includes a resin layer (P2 layer) that does not contain, as main component, a resin α or a resin β.
[XIV] A current collector as set forth in any one of paragraphs [I] to [XIII], wherein M layers are present on both surfaces of the polyester film, and, on each surface, the adhesion strength between the surface of the polyester film and the M layer is 2 N/15 mm or more and 5 N/15 mm or less.
[XV] A current collector as set forth in any one of paragraphs [I] to [XIV], wherein the breaking strength is 150 MPa or more and 400 MPa or less in at least either of the longitudinal direction and width direction in the film plane.
[XVI] A current collector as set forth in any one of paragraphs [I] to [XV], wherein the breaking elongation is 35% or more and 150% or less in at least either of the longitudinal direction and width direction in the film plane.
[XVII] A current collector as set forth in any one of paragraphs [I] to [XVI], wherein the polyester film has a silicon element content of 0 ppm by mass or more and 10 ppm by mass or less as determined by subjecting the polyester film to inductively coupled plasma atomic emission spectroscopy (ICP-AES) under the conditions described below:

<Analytical conditions>

Equipment: ICP atomic emission spectrometer (PS3520VDDII, manufactured by Hitachi High-Tech Science Corporation)
Sample preparation: The current collector is weighed in a beaker and subjected to pressurized decomposition first with sulfuric acid and then with nitric acid, followed by heat-ashing. The resulting ash is fused with a mixed flux of sodium carbonate and boric acid, and then dissolved under heat with dilute nitric acid to adjust the volume to 10 mL. Subsequently, the solution diluted with dilute nitric acid is subjected to inductively coupled plasma atomic emission spectroscopy to determine the amount of silicon element, which is adopted to represent the content of silicon element present in the polyester film.

(Measuring conditions)

Measuring wavelength: 251.6 nm
High frequency output: 1.2 kW
Plasma gas flow rate: 16 L/min
Auxiliary gas flow rate: 0.5 L/min

Carrier gas flow rate: 0.9 L/min
Photometry height: 12 mm

[XVIII] A polyester film exhibiting a maximum reduction current peak intensity of 0.000 mA/cm$^2$ or more and 0.050 mA/cm$^2$ or less in CV measurement.

[Procedure of CV measurement]

CV measurement is performed in the steps (i) to (iii) described below to determine the maximum reduction current peak intensity.

(i) Preparation of 2032 type coin cell

Copper metal layers are formed by sputtering on both surfaces of the polyester film, and then a disk-like sample with a diameter of 16 mm is punched out. A polyethylene separator with a diameter of 18 mm, a lithium metal foil with a diameter of 16.1 mm, and two stainless steel plates (SUS304) are placed in this order on either surface of the copper metal layer of the punched sample, and they are sealed with an electrolytic solution as described below to fabricate a 2032 type coin cell. During this procedure, the other surface of the copper metal layer, which is opposite to the surface covered by the aforementioned polyethylene separator, is maintained in contact with the casing of the 2032 type coin cell.

(Components of electrolytic solution)

- Electrolyte substance: 1 mol/L lithium hexafluorophosphate ($LiPF_6$)
- Solvent: A 1:1 (by volume) liquid mixture of ethylene carbonate (EC) and diethylene carbonate (DEC)
- Preparation environment: Preparation is performed in an argon gas circulation type glove box with a dew point of -70°C or less and an oxygen concentration of 10 ppm by volume or less.

(ii) CV measurement

The 2032 type coin cell prepared in the aforementioned step (i) is subjected to cyclic voltammetry measurement conducted under the following conditions using a VSP instrument manufactured by Biologic. Potential sweep operation is performed assuming that the redox potential of lithium metal is 0 V as reference, and the measured current value (mA) is divided by the sample area (2.01 cm$^2$) to determine the current per unit area (mA/cm$^2$).

(Measuring conditions)

- Test temperature: 25°C
- Potential sweep: range 0.01 to 2.0 V (vs. $Li^+$/Li)
- Sweep rate: 1 mV/s
- Number of cycles: 10 cycles

(iii) Maximum reduction current peak intensity

The measurements of the current per unit area (mA/cm$^2$) obtained in the aforementioned step (ii) are compared among them, and the one with the largest absolute value is adopted as the maximum reduction current peak intensity (mA/cm$^2$).

[XIX] A polyester film as set forth in paragraph [XVIII], including at least one layer that contains, as main component, a polyester resin (resin $\alpha$) incorporating a dicarboxylic acid component and a diol component having 3 or more and 16 or less carbon atoms.
[XX] A polyester film as set forth in paragraph [XVIII], including at least one layer that contains, as main component, a polyester resin (resin $\beta$) incorporating a diol component and a dicarboxylic acid component having 9 or more and 16 or less carbon atoms.
[XXI] A polyester film as set forth in either paragraph [XVIII] or [XIX], wherein the thickness of the polyester film is 1 $\mu$m

or more and 30 $\mu$m or less.

[XXII] A negative electrode current collector as set forth in any one of paragraphs [I] to [XVII].

[XXIII] An electrical storage element having a current collector as set forth in any one of paragraphs [I] to [XVII].

[XXIV] An electrical storage element including a negative electrode current collector as set forth in paragraph [XXII] and a negative electrode active material layer disposed on at least either surface thereof.

[XXV] An electrical storage element having a structure including two or more laminated layers, each of the laminated layers containing a negative electrode current collector as set forth in paragraph [XXII], an electrolyte, a positive electrode current collector, and an electrolyte stacked in this order.

[XXVI] A secondary battery including an electrical storage element as set forth in any one of paragraphs [XXIII] to [XXV].

[XXVII] An electric vehicle equipped with a secondary battery as set forth in paragraph [XXVI].

[XXVIII] An electric flying object equipped with a secondary battery as set forth in paragraph [XXVI].

## ADVANTAGEOUS EFFECTS OF THE INVENTION

The present invention can provide a current collector that, particularly when used in a negative electrode, is less prone to void formation likely to be caused by resin decomposition gases etc. generated, for example, during charging and discharging of the secondary battery and also provide a polyester film that, particularly when used in a negative electrode current collector, is less prone to void formation likely to be caused by decomposition gases etc. generated during charging and discharging.

## BRIEF DESCRIPTION OF THE DRAWINGS

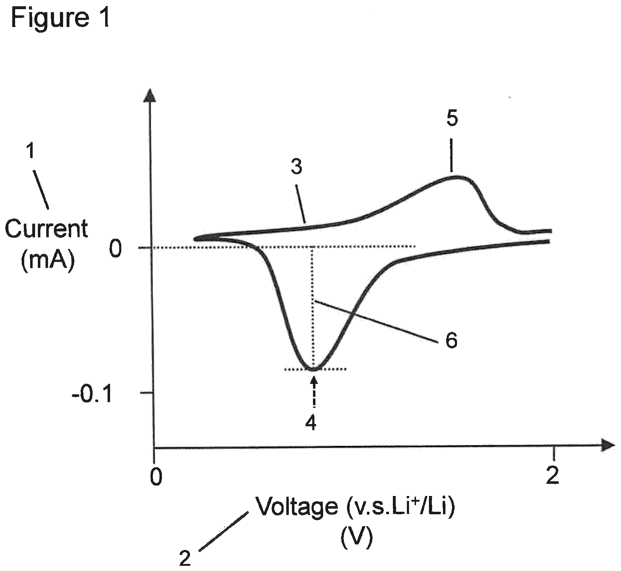

[Figure 1] This shows a typical curve obtained by plotting the current against the applied potential observed in CV measurement and also shows a maximum reduction current peak intensity that can be read from the curve.

## DESCRIPTION OF PREFERRED EMBODIMENTS

The present invention is described in detail below.

A preferred embodiment of the present invention provides a current collector including a layer (M layer) made of a metal and/or a metal based compound and a polyester film and exhibiting a maximum reduction current peak intensity of 0.000 mA/cm$^2$ or more and 0.050 mA/cm$^2$ or less in CV measurement performed as described below. The current collector according to this embodiment is less prone to generation of resin decomposition gases likely to be caused by, for example, charging and discharging of the secondary battery.

The present inventors prepared resin current collectors that include polyester films with reference to Patent documents 1 to 3 for the purpose of examining their properties such as heat resistance and found that, when used as current collectors in secondary batteries, they suffer durability problems due to decomposition gases from the resin. It was thought that possible factors therein included hydrolysis of the polyester film, release of dissolved gases from the polyester film, and reactions between the catalyst present in the polyester film and the electrolytic solution. As a result of detailed examination, the present inventors arrived at the present invention after finding that redox reactions involving the polyester film caused by the applied voltage played a major role in the gas generation.

It should be noted that for the present invention, CV (cyclic voltammetry) measurement is conducted according to the evaluation procedure described below.

### [Procedure of CV measurement]

CV measurement is performed in the steps (i) to (iii) described below to determine the maximum reduction current peak intensity.

### (i) Preparation of 2032 type coin cell

A sample is prepared by forming a copper metal layer by sputtering on the surface of a current collector and then punching out a disk with a diameter of 16 mm. A polyethylene separator with a diameter of 18 mm, a lithium metal foil with a diameter of 16.1 mm, and two stainless steel plates (SUS304) are placed in this order on either surface of the copper metal layer of the punched sample, and they are sealed with an electrolytic solution as described below to fabricate a 2032 type coin cell. During this procedure, the other surface of the current collector, which is opposite to the surface covered by the polyethylene separator, is maintained in contact with the casing of the 2032 type coin cell. It should be noted that for the present invention, the polyethylene separator used in the CV measurement has a thickness of 4 $\mu$m or more and 20 $\mu$m or

less and an air permeability of 500 seconds or less.

(Electrolyte components)

- Electrolyte: 1 mol/L lithium hexafluorophosphate ($LiPF_6$)
- Solvent: A 1:1 (by volume) liquid mixture of ethylene carbonate (EC) and diethylene carbonate (DEC)
- Preparation environment: Preparation is performed in an argon gas circulation type glove box with a dew point of -70°C or less and an oxygen concentration of 10 ppm by volume or less.

(ii) CV measurement

The 2032 type coin cell prepared in the aforementioned step (i) is subjected to cyclic voltammetry measurement conducted under the following conditions using a VSP instrument manufactured by Biologic. The current (mA) is observed while performing potential sweep operation assuming that the redox potential of lithium metal is 0 V as reference, and it is divided by the sample area (2.01 $cm^2$) to determine the current per unit area ($mA/cm^2$).

(Measuring conditions)

- Test temperature: 25°C
- Potential sweep range: 0.01 to 2.0 V (vs. $Li^+/Li$)
- Sweep rate: 1 mV/s
- Number of cycles: 10 cycles

(iii) Maximum reduction current peak intensity

The measurements of the current per unit area ($mA/cm^2$) obtained in the aforementioned step (ii) are compared among them, and the one with the largest absolute value is adopted as the maximum reduction current peak intensity ($mA/cm^2$).

Here, in the case of a current collector that has M layers laid on both surfaces of a polyester film, a copper metal layer is formed on either surface of the current collector by sputtering and a disk with a diameter of 16 mm is punched out. Then, the copper metal layer, a polyethylene separator a diameter of 18 mm, a lithium metal foil with a diameter of 16.1 mm, and two stainless steel plates (SUS304) are placed in this order and sealed with the electrolytic solution to form a 2032 type coin cell. In the case of a current collector that has an M layer laid on either surface of a polyester film, a copper metal layer is formed by sputtering on the surface devoid of an M layer, and the same procedure is carried out for evaluation.

The potential sweep operation described above is performed, and the maximum reduction current peak intensity is measured. In the case of a current collector that has M layers laid on both surfaces of a polyester film as described above, the aforementioned coin cell preparation procedure and the potential sweep operation are carried out for each surface separately. Then, reduction current peak measurement is performed, and the maximum value is adopted.

If in this CV measurement, the maximum reduction current peak intensity normalized to the sample area (2.01 $cm^2$), which is observed during potential sweep operation where the redox potential of lithium metal is assumed to be 0 V as reference, is 0.050 $mA/cm^2$ or less, it indicates that no current is found not to be generated due to a redox reaction at the interface between the polyester film and the M layer. If a positive current value is shown, it indicates an oxidation reaction occurring at the interface between the polyester film and the M layer, whereas if a negative current value is shown, it indicates a reduction reaction occurring at the interface between the polyester film and the M layer.

In particular, when the minimum observed current value is -0.050 $mA/cm^2$ or more and less than 0.000 $mA/cm^2$, it suggests that reductive decomposition is unlikely to occur at the interface between the M layer and the polyester film even when the M layer laid on the polyester film undergoes an oxidation reaction due to potential sweep operation and functions as a negative electrode in the coin cell. It is more preferable that the maximum reduction current peak intensity be in the range of 0.000 $mA/cm^2$ or more and 0.010 $mA/cm^2$ or less while the minimum current value is -0.010 $mA/cm^2$ or more and less than 0.000 $mA/cm^2$. It is most preferable that the maximum reduction current peak intensity be in the range of 0.000 $mA/cm^2$ or more and 0.006 $mA/cm^2$ or less while the minimum current value is -0.006 $mA/cm^2$ or more and less than 0.000 $mA/cm^2$. Here, the current collector has two surfaces, but it is sufficient that at least one surface gives a maximum reduction current peak intensity of 0.000 $mA/cm^2$ or more and 0.050 $mA/cm^2$ or less in the aforementioned CV measurement. It is more preferable that both surfaces give maximum reduction current peak intensities of 0.000 $mA/cm^2$ or more and 0.050

mA/cm$^2$ or less in the CV measurement.

In general, the ester bonds that connect polyester molecular chains are known to undergo hydrolysis, that is, a reaction where the bonds are cleaved to cause decomposition as a result of a reaction with water molecules, hydrogen ions, etc.

Therefore, although the exact reaction path involving the polyester film under an applied voltage has not been clarified, it is considered that trace amounts of water molecules remaining in the polyester film or hydrogen ions formed through ionization of hydrogen atoms present in the carboxyl groups at the polyester molecular ends may work to cause ester bond cleavage and decomposition reaction in a manner similar to hydrolysis. Accordingly, control of the reduction reaction in the polyester film is important to suppress the generation of decomposition gases.

For the present invention, the term "polyester film" refers to a film that contains a polyester resin as main component. Here, the term "main component" used for the present invention refers to the component that accounts for more than 50 mass% of the total mass, which accounts for 100 mass%, of all components of the film. Various preferred embodiments will be described below, but in each embodiment that adopts a particular resin as main component, it is more preferable that such a particular resin account for 85 mass% or more, and still more preferable that it account for 93 mass% or more.

A polyester resin as referred to for the present invention is produced through polycondensation polymerization of a dicarboxylic acid constituent component and a diol constituent component. A constituent component as referred to herein is a minimum unit that can be produced through hydrolysis of a polyester. It should be noted that "a polyester resin produced through polycondensation of a dicarboxylic acid constituent component and a diol constituent component" is occasionally referred to as "a polyester resin incorporating a dicarboxylic acid component and a diol component".

According to a preferred embodiment of the present invention, the polyester film exhibits a maximum reduction current peak intensity of 0.050 mA/cm$^2$ or less in CV measurement (0.01 V to 2.0 V, 10 cycles). When performing CV measurement for a polyester film, copper metal layers are formed first by sputtering on both surfaces of the polyester film, and then a disk-like sample with a diameter of 16 mm is punched out, followed by taking measurements according to the procedure described above.

For the present invention, as a useful method that serves to realize a maximum reduction current peak intensity of 0.050 mA/cm$^2$ or less in the aforementioned CV measurement (0.01 V to 2.0 V, 10 cycles), it is preferable, for example, that the resin layer in contact with the copper metal layer in performing the aforementioned CV measurement is in the form of a layer (P1 layer) whose main component is a polyester resin (resin $\alpha$) incorporating a dicarboxylic acid component and a diol component having 3 or more and 16 or less carbon atoms or a polyester resin (resin $\beta$) incorporating a diol component and a dicarboxylic acid component having 9 or more and 16 or less carbon atoms, wherein diol components having 3 or more and 16 or less carbon atoms account for 85 mol% or more of all diol components, which account for 100 mol%, in the P1 layer or dicarboxylic acid components having 9 or more and 16 or less carbon atoms account for 85 mol% or more of all dicarboxylic acid components, which account for 100 mol%, in the P1 layer, the P1 layer having an intrinsic viscosity (IV) of 0.60 dl/g or more and at the same time the P1 layer having a moisture content of 3,000 ppm by mass or less. Here, it is more preferable that the P1 layer contain the resin $\alpha$ as main component and that diol components having 3 or more and 16 or less carbon atoms account for 85 mol% or more of all diol components, which account for 100 mol%, in the P1 layer.

It is preferable that the polyester film according to the present invention have at least one layer that contains, as main component, a polyester resin (resin $\alpha$) incorporating a dicarboxylic acid component and a diol component having 3 or more and 16 or less carbon atoms or have at least one layer that contains, as main component, a polyester resin (resin $\beta$) incorporating a diol component and a dicarboxylic acid component having 9 or more and 16 or less carbon atoms. It is more preferable that the polyester film according to the present invention have at least one layer that contains, as main component, a polyester resin (resin $\alpha$) incorporating a dicarboxylic acid component and a diol component having 3 or more and 16 or less carbon atoms.

If a diol component having 3 or more and 16 or less carbon atoms or a dicarboxylic acid component having 9 or more and 16 or less carbon atoms is used, it serves to reduce molecular mobility around ester bonds, thereby preventing water molecules and hydrogen ions from approaching ester bonds to cause a reaction. Accordingly, this can work for control of the reduction reaction in the polyester film under an applied voltage to suppress the generation of decomposition gases.

Examples of diol constituent components that can be used to form a resin $\alpha$ include aliphatic diols such as 1,2-propanediol, 1,3-propanediol, 1,4-butanediol, 1,2-butanediol, 1,3-butanediol, 1,5-pentanediol, 1,6-hexanediol, 1,7-heptanediol, 1,8-octanediol, 1,9-nonanediol, and 1,10-decanediol; alicyclic diols such as 1,4-cyclohexanedimethanol and spiroglycol; and aromatic diols such as bisphenol A; as well as strings of multiple units of diols as listed above linked together.

The use of an aliphatic diol is preferable because molecular interactions between diol units can be enhanced so that highly dense and huge molecular structures, similar to crystalline structures, are formed around ester bonds, and it is more preferable to use straight-chain aliphatic diols such as 1,3-propanediol, 1,4-butanediol, and 1,5-pentanediol.

Furthermore, if an alicyclic diol is used, it is preferable because three dimensionally large cyclic molecules with low mobility are present around ester bonds to suppress the approach of water molecules and hydrogen ions.

Examples of dicarboxylic acid constituent components that can be used to form a resin α include aromatic dicarboxylic acids such as terephthalic acid, isophthalic acid, phthalic acid, 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyl dicarboxylic acid, and 4,4'-diphenyl ether dicarboxylic acid, as well as ester derivatives thereof.

Examples of the resin α include polybutylene terephthalate (PBT), polytrimethylene terephthalate (PTT), and polycyclohexylene dimethylene terephthalate (PCT). It is preferable that the aforementioned polyester film contain either polycyclohexadimethylene terephthalate or polybutylene terephthalate as main component and it is more preferable that the polyester film contain polycyclohexadimethylene terephthalate as main component. In regard to these polyester resins, it is preferable that part of the dicarboxylic acid components in polyester be copolymerized with isophthalic acid, naphthalene dicarboxylic acid, etc., for the purpose of increasing the stretchability of the polyester film, as long as it has little influence on the effects of the present invention. This is because excessive orientation crystallization of the resin in the stretching step, which can result in breakage in the film formation step, can be suppressed by introducing copolymerization components having different structures. It is preferable that the copolymerization components used for the dicarboxylic acid components account for 1.5 mol% or more and 15 mol% or less. If its content is 15 mol% or less, it serves to prevent deterioration of mechanical properties from being caused by insufficient orientation of the resin.

If a diol component having 16 or less carbon atoms is used, it allows the diol units to undergo a polymerization reaction without aggregation during the polyester polymerization step, thus ensuring the formation of a polyester resin having a molecular weight suitable for producing an intended film. It is more preferable for the diol component to contain 12 or less, still more preferably 9 or less, carbon atoms.

Examples of diol constituent components that can be used to form a resin β include aliphatic diols such as ethylene glycol, 1,2-propanediol, 1,3-propanediol, 1,4-butanediol, 1,2-butanediol, 1,3-butanediol, 1,5-pentanediol, 1,6-hexanediol, 1,7-heptanediol, 1,8-octanediol, 1,9-nonanediol, and 1,10-decanediol; and alicyclic diols such as 1,4-cyclohexanedimethanol and spiroglycol; as well as strings of multiple units of diols as listed above linked together.

Examples of dicarboxylic acid constituent components that can be used to form a resin β include aromatic dicarboxylic acids such as 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyl dicarboxylic acid, and 4,4'-diphenyl ether dicarboxylic acid.

If a dicarboxylic acid component having 9 or more and 16 or less carbon atoms is used, it serves to decrease the molecular mobility around ester bonds that can work as a decomposition point of the polyester resin. As a result, molecules derived from the electrolytic solution, electrolytes, or additives to work for decomposing ester bonds present in the neighborhood can be prevented from approaching the ester bonds of the polyester resin.

In particular, in the case of using an aromatic dicarboxylic acid component having 9 or more and 16 or less carbon atoms or an aliphatic dicarboxylic acid component having 9 or more and 16 or less carbon atoms, self-aggregation of dicarboxylic acid units can occur so that molecular chains of the polyester resin are stacked densely. Thus, the aforementioned molecules that can work to decompose ester bonds can be prevented from penetrating between chains of the polyester resin.

If the dicarboxylic acid component in use has 16 or less carbon atoms, it allows the dicarboxylic acid units to undergo a polymerization reaction without aggregation in the polyester polymerization step, thus ensuring the formation of a polyester resin having a molecular weight suitable for producing an intended film. It is more preferable to use a dicarboxylic acid component having 14 or less carbon atoms.

A good example of the resin β is polyethylene-2,6-naphthalate (hereinafter referred to as PEN). In such a polyester resin, part of the dicarboxylic acid components in the polyester may be copolymerized with isophthalic acid, naphthalene dicarboxylic acid, etc., or part of the diol components may be copolymerized with polyethylene glycol, as long as it has little influence on the effects of the present invention.

Furthermore, a polyester resin including a dicarboxylic acid component having 9 or more and 16 or less carbon atoms and a diol component having 3 or more and 16 or less carbon atoms as described above can also be used suitably.

It is preferable that the polyester film according to the present invention have a layer (P1 layer) containing a resin α as main component or containing a resin β as main component at least on either surface thereof. This embodiment serves to control the reduction reaction in the polyester film, which is particularly likely to occur at the surface of a polyester film under an applied voltage, and thereby it serves to suppress the generation of decomposition gases. In addition, it is more preferable that the polyester film according to the present invention have M layers on both surfaces thereof. A polyester film according to this embodiment can be used suitably as a bipolar type battery current collector. Furthermore, it is more preferable that at least the M layer on either surface be in contact with the P1 layer while the M layer in contact with the P1 layer is a layer containing copper element. According to this embodiment, the presence of the P1 layer serves so that the reduction reaction likely to occur in the polyester film under an applied voltage is prevented from being accelerated by copper while making most of good electrical properties of copper. Furthermore, from the same point of view, it is particularly preferable that the P1 layer in contact with the M layer containing copper element be a layer containing a resin α as main component.

In addition, in the case where the polyester film according to the present invention has M layers laid on both surfaces thereof, it is preferable that it have a structure in which the M layers on both surfaces thereof include the same resin $\alpha$ or different resins $\alpha$ as main components.

From the same point of view, it is more preferable that diol components having 3 or more and 16 or less carbon atoms account for 51 mol% or more of all diol components, which account for 100 mol%, in the polyester film or that dicarboxylic acid components having 9 or more and 16 or less carbon atoms account for 51 mol% or more of all dicarboxylic acid components, which account for 100 mol%, in the polyester film, and it is still more preferable that diol components having 3 or more and 16 or less carbon atoms account for 85 mol% or more of all diol components, which account for 100 mol%, in the polyester film or that dicarboxylic acid components having 9 or more and 16 or less carbon atoms account for 85 mol% or more of all dicarboxylic acid components, which account for 100 mol%, in the polyester film. In particular, it is preferable that a 1,4-cyclohexanedimethanol component or 1,4-butanediol account for 51 mol% or more of all diol components, which account for 100 mol%, in the polyester film. It is more preferable that a 1,4-cyclohexanedimethanol component account for 51 mol% or more, and it is still more preferable that a 1,4-cyclohexanedimethanol component account for 85 mol% or more.

Furthermore, from the same point of view, it is more preferable that diol components having 3 or more and 16 or less carbon atoms account for 51 mol% or more of all diol components, which account for 100 mol%, in at least one layer of the polyester film or that dicarboxylic acid components having 9 or more and 16 or less carbon atoms account for 51 mol% or more of all dicarboxylic acid components, which account for 100 mol%, in the layer, and it is still more preferable that diol components having 3 or more and 16 or less carbon atoms account for 85 mol% or more of all diol components, which account for 100 mol%, in the layer or that dicarboxylic acid components having 9 or more and 16 or less carbon atoms account for 85 mol% or more of all dicarboxylic acid components, which account for 100 mol%, in the layer. In particular, it is preferable that a 1,4-cyclohexanedimethanol component or 1,4-butanediol account for 51 mol% or more of all diol components, which account for 100 mol%, in the layer. It is more preferable that a 1,4-cyclohexanedimethanol component account for 51 mol% or more, and it is still more preferable that a 1,4-cyclohexanedimethanol component account for 85 mol% or more. Here, qualitative and quantitative analyses of components of a polyester resin should be performed according to the procedure described below. According to a more preferable embodiment, the same preferable configuration as for the P1 layer can be applied suitably to the above layer.

It is preferable that the resin $\alpha$ have an intrinsic viscosity (IV) of 0.60 dl/g or more. If the resin $\alpha$ has an intrinsic viscosity (IV) of 0.60 dl/g or more, the polyester molecular chains present in the resin $\alpha$ have larger lengths, leading to a decrease in the number of molecular chain ends per unit weight of the polyester, which contribute to the decomposition reaction of the P1 layer during CV measurement, and this serves more effectively to facilitate the control of the decomposition reactions involving hydrogen ions etc. in the P1 layer during CV measurement.

The intrinsic viscosity (IV) of the resin $\alpha$ is more preferably in the range of 0.70 dl/g or more, still more preferably in the range of 0.75 dl/g or more, and most preferably in the range of 0.80 dl/g or more. Here, in terms of intrinsic viscosity (IV), the resin $\beta$ should preferably have the same features.

In addition, it is preferable that the resin $\alpha$ have a moisture content of 3,000 ppm by mass or less. If the moisture content of the resin $\alpha$ is 3,000 ppm by mass or less, it serves to suppress decomposition reactions involving water molecules in the polyester film during CV measurement. In addition, the moisture content of the resin $\alpha$ is preferably 2,500 ppm by mass or less and more preferably 2,000 ppm by mass or less. Here, in terms of intrinsic viscosity (IV), the resin $\beta$ should preferably have the same features.

For the present invention, in order to realize a maximum reduction current peak intensity of 0.050 mA/cm$^2$ or less in the aforementioned CV measurement (0.01 V to 2.0 V, 10 cycles), it is preferable that the P1 layer contain the resin $\alpha$ as main component and that the P1 layer have an intrinsic viscosity (IV) of 0.60 dl/g or more. If the P1 layer has an intrinsic viscosity (IV) of 0.60 dl/g or more, the polyester molecular chains present in the P1 layer have larger lengths, leading to a decrease in the number of molecular chain ends per unit weight of the polyester, and this serves more effectively to facilitate the control of the decomposition reactions involving hydrogen ions etc. in the P1 layer during CV measurement.

The intrinsic viscosity (IV) of the P1 layer is more preferably in the range of 0.70 dl/g or more, still more preferably in the range of 0.75 dl/g or more, and most preferably in the range of 0.80 dl/g or more.

In addition, it is preferable that the P1 layer have a moisture content of 3,000 ppm by mass or less. If the moisture content of the P1 layer is 3,000 ppm by mass or less, it serves to suppress decomposition reactions involving water molecules etc. in the P1 layer during CV measurement. The moisture content of the P1 layer is more preferably 2,500 ppm by mass or less and still more preferably 2,000 ppm by mass or less.

It is more preferable that the polyester film according to the present invention be in a biaxially oriented state. This is because when the film is in a biaxially oriented state, molecular mobility around ester bonds is reduced as a result of stretching and orientation, thereby further suppressing the decomposition that is caused by reduction reactions. Furthermore, it leads to an increase in the mechanical strength of the film and a decrease in crease formation, and it is also preferable from the perspective of enhancing its thermal dimensional stability. A biaxially orientated film as referred to herein is one that shows a biaxially orientated pattern in wide angle X-ray diffraction observation. In general, a biaxially orientated polyester film can be produced by stretching an unstretched thermoplastic resin film in the axis direction of the film formation machine (hereinafter occasionally referred to as the longitudinal direction) and in the width direction, followed by heat treatment to ensure completion of orientation crystallization. This step will be described in more detail later.

From the perspective of improving the stretchability of the polyester film, it is preferable for the P1 layer to contain the resin α or the resin β as main component. However, there may exist an interlayer, referred to as P11 layer, that is not in contact the M layer. It is preferable that the film have a structure of P1 layer/P11 layer/P1 layer.

To increase the interlaminar adhesion between the P1 layer and the P2 layer that will be described later, it is preferable that the diol component and/or the dicarboxylic acid component of the polyester resin contained as main component in the P2 layer be also present in the P1 layer and account for 1.5 mol% or more and 15 mol% or less therein. Specifically, in the case where the P1 layer contains polycyclohexadimethylene terephthalate resin as main component while the P2 layer contains polyethylene terephthalate resin as main component, it is preferable that the P1 layer contain 1.5 mol% or more and 15 mol% or less ethylene glycol as a diol component. Furthermore, in the case where the P1 layer contains polyethylene naphthalate resin as main component while the P2 layer contains polyethylene terephthalate resin as main component, it is preferable that the P1 layer contain 1.5 mol% or more and 15 mol% or less terephthalic acid as a dicarboxylic acid component. The interlaminar adhesion between the P1 layer and the P2 layer can be increased if the diol component and/or the dicarboxylic acid component of the polyester resin contained as main component in the P2 layer are also present in the P1 layer and account for 1.5 mol% or more therein. Furthermore, if the diol component and/or the dicarboxylic acid component of the polyester resin contained as main component in the P2 layer be also present in the P1 layer and account for 15 mol% or less therein, it serves to allow a current value in a preferable range to be obtained in CV measurement.

(P2 layer)

The polyester film according to the present invention has a structure that include, in addition to the P1 layer, a P2 layer that is a resin layer in which the main component is not the resin α or the resin β. This allows the inclusion of a polyester layer having superior mechanical properties to the resin α or the resin β and accordingly serves to enhance the overall mechanical properties of the polyester film.

Examples of polyester resins that can be used to form the P2 layer include polyethylene terephthalate (PET).

The laminated structure of the P1 layer and the P2 layer may be a two layer structure of P1 layer/P2 layer or a three layer structure of P1 layer/P2 layer/P1 layer. However, if an M layer that contains copper is to be included, it is preferable that the structure be configured so that the copper-containing M layer is in contact only with the P1 layer.

In the case where the P1 layer and the P2 layer contain different resins as main components, it is preferable that the diol component and/or the dicarboxylic acid component of the polyester resin contained as main component in the P1 layer be also present in the P2 layer and account for 1.5 mol% or more and 15 mol% or less therein in order to enhance the interlaminar adhesion between the P1 layer and the P2 layer. Specifically, in the case where the P1 layer contains polycyclohexadimethylene terephthalate resin as main component while the P2 layer contains polyethylene terephthalate resin as main component, it is preferable that the P2 layer contain the cyclohexadimethylene component as diol component at a concentration of 1.5 mol% or more and 15 mol% or less. Furthermore, in the case where the P1 layer contains polyethylene naphthalate resin as main component while the P2 layer contains polyethylene terephthalate resin as main component, it is preferable that the P2 layer contain the 2,6-naphthalenedicarboxylic acid component as dicarboxylic acid component at a concentration of 1.5 mol% or more and 15 mol% or less. If the diol component and/or the dicarboxylic acid component of the polyester resin contained as main component in the P1 layer are also present in the P2 layer and account for 1.5 mol% or more therein, it serves to enhance the interlaminar adhesion between the P1 layer and the P2 layer. Furthermore, if the diol component and/or the dicarboxylic acid component of the polyester resin contained as main component in the P1 layer are also present in the P2 layer and account for 15 mol% or less therein, it serves to prevent the formation of a biaxially stretched film having deteriorated mechanical strength.

For the present invention, the P1 layer and the P2 layer may contain particles as long as the effects of the present invention are not impaired. The particles to be added may be either inorganic particles or organic particles, and two or more types of particles may be used in combination. From the perspective of imparting good slip properties to the surface of the polyester film by controlling the surface roughness of the polyester film, useful materials for inorganic particles include, for example, calcium carbonate, magnesium carbonate, zinc carbonate, titanium oxide, zinc oxide, cerium dioxide, magnesium oxide, barium sulfate, zinc sulfide, calcium phosphate, alumina (α-alumina, β-alumina, γ-alumina, δ-alumina), mica, mica titanium, zeolite, talc, clay, kaolin, lithium fluoride, calcium fluoride, montmorillonite, zirconia, wet silica, dry silica, and colloidal silica. Examples of constituent materials for organic particles include organic materials such as acrylic resin, styrene based resin, silicone resin, and polyimide resin, and the particles may be core-shell type organic particles.

In addition, particles of inorganic metals such as gold, silver, and copper, or carbon particles may be added from the perspective of controlling the volume resistivity of the polyester film according to the present invention and imparting conductivity to it to provide a resin based current collector foil having improved electrical characteristics.

(Polyester film)

For the polyester film according to the present invention, it is preferable that T (μm) be 1 or more and 30 or less, wherein T denotes the thickness. If the thickness T (μm) of the polyester film is 1 or more, it serves to allow the M layer formation step, which will be described later, to be carried out without film breakage. T is more preferably 3 or more and still more preferably 3.5 or more. On the other hand, the thickness T (μm) of the polyester film is 30 or less, it serves to avoid an increase in the overall battery weight and thickness even when it is adopted as a component of a lithium ion battery. T is more preferably 20 or less and still more preferably 15 or less.
For the polyester film according to the present invention, it is preferable that the overall intrinsic viscosity (IV) of the polyester film be 0.60 dl/g or more. If the value of IV is 0.60 dl/g or more, it means that the molecular chains of the polyester have suitably long lengths to allow crystallization to proceed at an appropriate rate while avoiding breakage in the stretching step, thereby ensuring stable film formation. In addition, the polyester molecular chains have larger lengths to ensure a decrease in the number of molecular chain ends per unit weight of the polyester that contribute the decomposition reactions, and this serves more effectively to facilitate the control of the decomposition reactions involving hydrogen ions etc. in the polyester film during CV measurement. The overall intrinsic viscosity (IV) of the polyester film is more preferably in the range of 0.70 dl/g or more, still more preferably 0.75 dl/g or more, and most preferably 0.80 dl/g or more.
It is preferable that the polyester film have a moisture content of 3,000 ppm by mass or less. If the moisture content of the polyester film is 3,000 ppm by mass or less, it serves to suppress decomposition reactions involving water molecules etc. in the polyester film during CV measurement. The moisture content of the polyester film is more preferably 2,500 ppm by mass or less and still more preferably 2,000 ppm by mass or less.

(Biaxially oriented polyester film)

It is preferable that the polyester film according to the present invention be in a biaxially oriented state. Biaxial orientation works to improve mechanical strength of the film, which serves to suppress creasing and curling, and prevent film breakage during the processing step for M layer formation that will be described later. In addition, if stretching stress is applied uniformly during the stretching step, it serves to allow the polyester film to have more uniform thicknesses in both the width direction and the longitudial direction. In the case of applying the film to a resin based current collector, it serves to suppress variations in electrical characteristics of the resin based current collector foil from occurring as a result of sudden thickness irregularities.
In the case where the polyester film according to the present invention has a laminated structure including the P1 layer and the P2 layer as described above, there are no specific limitations on the method to use to laminate the P1 layer and the P 2 layer, but preferable examples thereof include a coextrusion method in which the resins for the layers described later are melted and extruded in a stacked matter, a method in which a film being formed is laminated with other resin layer materials that are fed into an extruder and melt-extruded from the nozzle (melt-lamination method), and a method in which individual films are formed separately first and then laminated together with adhesive layers interposed in between, of which the coextrusion method is used preferably because layers can be stacked uniformly and disturbing objects can be prevented from getting in between the layers.
For the polyester film according to the present invention, it is preferable that the breaking elongation be 35% or more and 150% or less in at least either of the longitudinal direction and width direction in the film plane. If the polyester film according to the present invention, incorporated as a current collector in an electrical storage element, has a breaking elongation of 35% or more in at least one in-plane direction, it serves to prevent deterioration in performance of the electrical storage element from resulting from breakage of the incorporated polyester film caused by expansion and deformation of the electrical storage element due to heat generated by driving the electrical storage element. Furthermore, this serves to enhance the tensile resistance and bending resistance and prevent extreme deterioration in battery performance due to breakage of the polyester film even in the case where it is deformed when used as a component of a battery and subjected to a processing step. In addition, if the polyester film according to the present invention has a breaking elongation of 150% or less in at least either of the longitudinal direction and the width direction in the film plane, it indicates that it has a low degree of crystallinity. When incorporated in an electrical storage element, the polyester film can increase in crystallization over time under heat generated from charging and discharging of the electrical storage element, but such a breaking elongation serves to prevent deterioration in battery performance due to film breakage that may be caused by a small deformation.
The breaking elongation in at least either of the longitudinal direction and the width direction in the film plane is more preferably in the range of 65% or more and still more preferably 90% or more. On the other hand, the breaking elongation in at least either of the in-plane directions is more preferably in the range of 140% or less and still more preferably 130% or less.

For the breaking elongation of the polyester film according to the present invention, it is more preferable that the breaking elongation be in the aforementioned preferable range in at least either of the longitudinal direction and the width direction wherein the longitudinal direction of the polyester film is defined as the direction of its unwinding from the roll while the width direction of the polyester film is defined as the direction that forms an angle of 90° with the longitudinal direction. In addition, it is still more preferable that the breaking elongation be in the aforementioned preferable range in both the longitudinal direction and the width direction.

In regard to the breaking strength of the polyester film according to the present invention, it is preferable that the breaking strength be 150 MPa or more and 400 MPa or less in at least either of the longitudinal direction and the width direction in the film plane. If the polyester film has a breaking strength of 150 MPa or more in the case where it is incorporated as a current collector in an electrical storage element, it serves to prevent deterioration in performance of the electrical storage element from being caused as a result of breakage of the polyester film that is likely to occur under slight impact during conveyance of the electrical storage element. The breaking strength in at least either of the longitudinal direction and the width direction in the film plane is preferably in the range of 180 MPa or more in at least one direction in the plane and more preferably 200 MPa or more in at least one direction in the plane.

In the case where the polyester film is incorporated as a current collector in an electrical storage element, crystallization can proceed to an appropriate degree in the polyester film to cause an increase in strength whereas its durability against deformation can decrease to cause accumulation of slight volume changes in battery components as a result of charging and discharging of the electrical storage element, possibly resulting in breakage of the polyester film and a decline in the performance of the electrical storage element. However, this can be prevented if the polyester film has a breaking strength of 400 MPa or less in at least either of the longitudinal direction and the width direction in the film plane. In regard to its upper limit, the breaking strength is more preferably 350 MPa or less.

In regard to the breaking strength of the polyester film according to the present invention, it is more preferable that the breaking strength be in the aforementioned preferable range in at least either of the longitudinal direction and the width direction wherein the longitudinal direction of the polyester film is defined as the direction of its unwinding from the roll while the width direction of the polyester film is defined as the direction that forms an angle of 90° with the longitudinal direction. It is still more preferable that the breaking strength be in the aforementioned preferable range in both the longitudinal direction and the width direction.

It is preferable that the polyester film according to the present invention have a silicon element content of 0 ppm by mass or more and 10 ppm by mass or less. In the case where it is incorporated in a lithium ion secondary battery, the movement of lithium ions in the battery during charging and discharging is likely to be restricted as a result of their bonding to silicon atoms present in the polyester film, possibly resulting in a decrease in the discharge capacity of the lithium ion secondary battery. However, this can be prevented if its silicon content is 10 ppm by mass or less. In addition, in the above reaction path, silicon atoms in the polyester film work to bring lithium ions into the polyester film, and as a result, decomposition reactions of the polyester film are promoted on the negative electrode. This is considered to be because lithium ions coordinate to the oxygen atoms in the ester bonds in the polyester resin to induce polarization of the ester bonds, leading to accelerated reactions with the trace amounts of water molecules remaining in the polyester film or hydrogen ions formed through ionization of hydrogen atoms in the carboxyl groups at the polyester molecular ends.

The content of silicon element is preferably 5 ppm by mass or less and more preferably 1 ppm by mass or less. Here, the content of silicon element is determined by the method described in the section EXAMPLES.

(Production method for biaxially orientated polyester film)

Next, the production method for the biaxially orientated polyester film according to the present invention will be described below, but the present invention should not be construed as being limited to these examples.

A common polymerization technique can be adopted to produce a polyester film to use for the present invention. For example, it can be produced by performing an ester interchange reaction or an esterification reaction between a dicarboxylic acid component as described previously or an ester-forming derivative thereof and a diol component as described previously or an ester-forming derivative thereof by a generally known technique, followed by performing a melt polymerization reaction. In addition, if required, the polyester resin resulting from the melt polymerization reaction may be subjected to a solid phase polymerization reaction at or less than the melting point of the polyester resin.

A generally known production technique can be adopted appropriately to produce the polyester film according to the present invention. More specifically, the polyester film according to the present invention can be produced by heating and melting raw materials, which are dried as required, in an extruder and extruded from the nozzle onto a cooled casting drum to provide a sheet (melt casting method). Another useful technique is to dissolve raw materials in a solvent and extrude the solution from the nozzle onto a support such as casting drum and endless belt to prepare a film, which is then dried to remove the solvent from the film to provide a sheet (solution cast method).

Drying of the polyester resin used as raw material for the polyester film should be conducted at a temperature of not less than 100°C, which is the boiling point of water, under reduced pressure. This is preferable because trace amounts of moisture present in the raw material for polyester film can be removed completely. More preferably, drying is performed at 120°C or more under reduced pressure. From the perspective of increasing the drying efficiency of the polyester resin to use as raw material for the polyester film, it is more preferable to put the raw resin material in a rotating metal container and drying it at a drying temperature of 120°C or more under reduced pressure.

It is also preferable that the pressure in the extruder be reduced during the step for melt-extruding the polyester resin used as raw material for the polyester film so that the melting of the polyester resin and the removal of moisture therefrom are achieved simultaneously.

The implementation of moisture removal by performing drying of the raw material and/or extrusion under reduced pressure as described above serves to allow the moisture content in the P1 layer and the polyester film to be controlled in the desirable range.

To produce a two or more layered polyester film by melt casting, a technique that is suitably used is to use a separate extruder for each layer to form the intended biaxially oriented polyester film, melt the material for each layer, stack the layers in a molten state in a converging device located between the extruding device and the nozzle, introduce them into the nozzle, and extrude them into a sheet from the nozzle onto a casting drum cooled to a surface temperature of 20°C or more and 60°C or less to provide an unstretched film (coextrusion method).

(Sequential biaxial stretching)

In the case where the polyester resin film according to the present invention contains a polyester resin as main component, it is preferable that the stretching conditions to be adopted for biaxial stretching of an unstretched film include stretching in the longitudinal direction by introducing the unstretched film into a group of rolls heated at 70°C or more where it is stretched in the longitudinal direction and subsequent cooling in a group of rolls adjusted at a temperature of 20°C or more and 50°C or less. There are no specific limitations on the lower limit of the temperature of the heating rolls used for the stretching in the longitudinal direction as long as it does not impair the stretchability of the sheet, but it is preferably higher than the glass transition temperature of the polyester resin used. Here, the stretching ratio in the longitudinal direction is preferably in the range of 2 or more and 5 or less. It is more preferably in the range of 3 or more and 4 or less. If the stretching ratio in the longitudinal direction is 2 or more, it serves to allow oriented crystallization to progress, leading to an increase in the film strength. On the other hand, if the stretching ratio is 5 or less, it serves to prevent the polyester resin being stretched from undergoing oriented crystallization to an excessive degree, which can lead to increased brittleness and breakage during film production.

The process film that is stretched in the longitudinal direction (unidirectionally stretched film) is then stretched in the direction perpendicular to the longitudinal direction (width direction). The unidirectionally stretched film is clipped at both ends and guided into a tenter oven, where it is stretched in the direction perpendicular to the longitudinal direction (width direction) to a ratio of 2 or more and 5 or less in an atmosphere heated at a temperature of 70°C or more and 160°C or less.

Then, it is preferable that the stretched film be subjected to heat treatment in order to stabilize the oriented structure within the film. Thermal hysteresis temperatures experienced by the film during the heat treatment step can be estimated based on the minor endothermic peak (hereinafter occasionally referred to as Tmeta) located immediately below the melting point determined by the differential scanning calorimetry (DSC) device that will be described later. In the case where polyester (melting point 280°C) is the main component, the temperature settings of the tenter apparatus preferably include a tenter's maximum temperature of 150°C or more and 270°C or less, whereas in the case of using a thermoplastic resin other than polyester as main component, it is preferably not lower than the temperature of [resin's melting point - 70°C] and not higher than the temperature of [resin's melting point - 10°C]. If the heat treatment temperature is 150°C or more, it serves to increase the dimensional stability of the biaxially oriented polyester film. On the other hand, if the heat treatment temperature is 270°C or less, it serves to prevent film breakage from being caused as a result of melting of the polyester film, thereby ensuring production with high productivity. It is more preferable that the heat treatment be performed in the temperature range of 180°C or more, still more preferably 250°C or more.

When polyester resin is used as main component, it is preferable for the aforementioned reason that Tmeta, which represents the thermal hysteresis temperature experienced by the film during the heat treatment step, be in the temperature range of 200°C or more and 260°C or less. It is more preferable for Tmeta to be in the temperature range of 210°C or more and 240°C or less.

In addition, the heat treatment step may be followed by treatment for relaxation (relaxation treatment) performed in the range of 1% or more and 6% or less in order to enhance dimensional stability. If treatment for relaxation of 1% or more is performed, it serves to enhance the dimensional stability of the biaxially oriented polyester film used in high temperature environments, whereas if the degree is 6% or less, it allows the biaxially oriented polyester film to be resistant to continuous application of appropriate tension, serving to prevent deterioration in thickness uniformity.

It is preferable that the stretching ratio be 2 or more and 5 or less in both the longitudinal direction and the width direction and that the area increase ratio (stretching ratio in the longitudinal direction × stretching ratio in the width direction) be 4 or more and 22 or less, more preferably 9 or more and 20 or less. If the area increase ratio is 4 or more, it serves to promote the molecular orientation of the biaxially oriented polyester film, thereby improving its durability, whereas if the area increase ratio is 22 or less, it serves to suppress film breakage during the stretching step.

(M layer: layer containing metal and/or metal based compound)

From the perspective of decreasing the resistance of the polyester film according to the present invention after being incorporated in a secondary battery and thereby improving the battery characteristics, it is preferable that both surfaces thereof be provided with layers each containing a metal and/or a metal based compound (M layer). It is more preferable that at least either of the M layers present on the surfaces contain copper, as this serves effectively to suppress gas generation when the film is used as a negative electrode current collector in a secondary battery.

There are no particular limitations on the technique to use for forming an appropriate M layer for the present invention, but good examples thereof include techniques such as vacuum deposition, sputtering, and electroplating (hereinafter occasionally referred to collectively as deposition techniques) that are performed in a vacuum or in a reduced pressure atmosphere of an inert gas such as argon, a technique of lamination of metal foil or metal based compound foil, directly or via an adhesive layer, with the polyester film and a technique of forming a metal layer through an electrochemical reaction using a solution containing a metal salt (electroplating or electroless plating). Among these, the use of a deposition technique is preferable from the perspective of using a roll of polyester film for continuous formation of an M layer over the film.

Various sputtering techniques are available including high frequency sputtering, magnetron sputtering, bipolar sputtering, DC sputtering, and reactive sputtering. Of these, high frequency sputtering is used preferably due to equipment simplicity, capability to deposit metal on insulating samples, and relatively small damage to the samples.

In the case of using the vacuum deposition technique, a preferable procedure is to install a polyester film roll in a vacuum chamber first, then unwind the film while keeping it in contact with a cooling roll, deposit thermally vaporized metal and/or a metal based compound onto the polyester film surface, allow it to solidify to ensure adhesion, form an M layer, and rewind it into a film roll.

Here, the vacuum chamber should have a vacuum atmosphere of $9.0 \times 10^{-3}$ Pa or less or a reduced pressure atmosphere of $9.0 \times 10^{-3}$ Pa or more and $1 \times 10^{-1}$ Pa or less containing an inert gas such as argon, either of which can be used suitably. Alternatively, the M layer may be produced by two or more sequential deposition steps including, for example, a step for forming a first M layer by sputtering and a subsequent step for forming a second M layer by vacuum deposition.

Examples of good vacuum deposition techniques include induction heating type vacuum deposition, resistance heating type vacuum deposition, laser beam type vacuum deposition, and electron beam type vacuum deposition, of which electron beam type vacuum deposition, laser beam type vacuum deposition, and induction heating type vacuum deposition are used suitably because they can use a deposition source with a high heat output. The heat output of the deposition source must be sufficiently large to grow an M layer to a desired thickness. It is necessary for the base to have a sufficiently high surface temperature, but it is difficult to directly measure it, and therefore, whether the heat quantity is sufficient or not is verified based on whether the deposited M layer has the desired thickness.

However, as the heat output of the deposition source is raised to a required level, there is a possibility that the temperature of the resin film increases excessively under management performed by a cooling function of an ordinary vacuum deposition technique, leading to thermal damage to cause deterioration in the mechanical properties of the resin film and even resulting in the melting of the resin film. Accordingly, it is preferable to perform the deposition steps while managing the cooling function so that the temperature is prevented from rising excessively during the deposition steps to ensure uniform cooling of the film. Specifically, it is preferable to cool the back face of the deposition surface uniformly by means of a cooling mechanism that includes a metal plate or metal roll that is sufficiently chilled by a refrigerant.

To form an M layer for the present invention that has a desired metal layer thickness, the implementation of its formation in a single deposition run (where one run is defined as a set of unwinding, depositing, and winding) is preferable from the perspective of productivity, resistance properties, quality, and grade. Alternatively, however, for example, a deposition run designed to perform thin film deposition for forming an aluminum deposited layer with a thickness of 50 nm may be conducted 20 times repeatedly (repeating the aforementioned run 20 times) to form an aluminum metal layer with a total thickness of 1 μm. In the case where an M layer is formed on the surface of the polyester film according to the present invention, modification of the surface of the polyester film may be carried out by vacuum plasma treatment, atmospheric plasma treatment, etc., in order to enhance the adhesion between the M layer and the polyester film.

Examples of metal elements that can be used to form the M layer include gold, silver, copper, zinc, lead, nickel, iron, aluminum, titanium, cobalt, manganese, cadmium, and palladium. The M layer may be made of a pure metal selected from the aforementioned metal elements or made of a metal compound containing a metal element as listed above combined with oxygen, nitrogen, fluorine, carbon, boron, chlorine, sulfur, or phosphorus. Here, the metal elements present in the M layers disposed on the surfaces of the polyester film may be identical to or different from each other.

For use as a resin based current collector for a lithium ion battery, the M layer is preferably made of a metal and/or a metal based compound containing copper element or aluminum element. If it is to be used as a resin based negative electrode current collector, it is more preferable that an M layer made of copper element be disposed on the aforementioned P1 layer.

In regard to the layered structure of the polyester film (P1 layer, P2 layer) and the M layer used for the present invention, it is preferably configured in such a manner that the P1 layer is the outermost layer made of at least either resin in the polyester film, wherein the M layer is directly disposed on the P1 layer. Specifically, it is preferable that the structure be configured as described below. In the case where the polyester film is a single layer film, it preferably has a structure of M layer/P1 layer/M layer or a structure of M layer/P1 layer/M' layer that has a layer (M' layer) that contains a metal and/or a metal based compound where the metal element is different from that in the M layer.

In the case where the polyester film has two or more layers, preferable structures include M layer/P1 layer/P2 layer/M layer, M layer/P1 layer/P2 layer/M' layer, M layer/P1 layer/P2 layer/P1 layer/M layer, or M layer/P1 layer/P2 layer/P1 layer/M' layer. In particular, in the case where the film has an M' layer in the form of a layer made of a metal and/or a metal based compound containing aluminum element and is to be used as the positive electrode of a resin based current collector, the structure of M layer/P1 layer/P2 layer/M' layer can be adopted.

More preferable structures include M layer/P1 layer/P2 layer/P1 layer/M layer and M layer/P1 layer/P2 layer/P1 layer/M' layer wherein both of the layers each made of a metal and/or a metal based compound are in contact with a P1 layer. For the present invention, each M layer preferably has a thickness of 0.1 μm or more because when the film is used as a resin based current collector, it serves to prevent deterioration in electrical characteristics attributable to unevenness in thickness of the metal layer and also because when it is incorporated in a battery cell, in particular, it serves to prevent an increase in resistance. The thickness of each M layer is more preferably 0.2 μm or more. On the other hand, the thickness of the M layer is preferably 5.0 μm or less because when the film is used as resin based current collector for a battery, it serves to prevent an increase in the weight of the battery. The thickness of each M layer is more preferably 3.0 μm or less. Furthermore, it is more preferable that each of the M layers present on both surfaces of the polyester film have a thickness of 0.2 μm or more. On the other hand, it is more preferable that each of the M layers present on both surfaces of the polyester film have a thickness of 3.0 μm or less.

In regard to the current collector according to the present invention, it is preferable that M layers be present on both surfaces of the polyester film, wherein, on each surface, the adhesion strength between the surface of the polyester film and the M layer is 2 N/15 mm or more and 5 N/15 mm or less, because in a battery containing the current collector according to the present invention, this serves to prevent each M layer from peeling off to cause a short circuit in the battery. As a good technique therefor, a metal layer with good affinity with the M layer may be formed in advance by sputtering etc. on the surface of the polyester film. The adhesion strength between the surface of the polyester film and each M layer is preferably in the range of 2.5 N/15 mm or more and 5 N/15 mm or less.

[Electrical storage element]

The electrical storage element according to the present invention includes an electrode assembly having a positive electrode and a negative electrode. It may also include an electrolytic solution, and in that case, it preferably includes a separator disposed between the positive electrode and the negative electrode. It is also preferable that electrical storage element contain a solid electrolyte rather than an electrolytic solution. In addition, it may also have a battery case for housing the electrode assembly.

Examples of such an electrical storage element include primary batteries, secondary batteries, electrical double layer capacitors, and aluminum electrolytic capacitors, but for the present invention, the production of a secondary battery is intended.

Examples of secondary batteries include lithium secondary batteries, lead storage batteries, nickel-cadmium batteries, nickel-hydrogen batteries, nickel-iron storage batteries, silver oxide-zinc storage batteries, manganese dioxide-lithium secondary batteries, lithium cobalt oxide-carbonate based secondary batteries, and vanadium-lithium secondary batteries.

Among these, secondary batteries are preferable because they are expected to work over a long period of time, and lithium secondary batteries are more preferable because they employ organic solvents to achieve high energy densities.

Examples of battery cases include aluminum cases, iron cases with nickel plated interior surfaces, and cases made of aluminum laminate films. The shapes of battery cases include pouch type, cylindrical, cuboid, and coin type. Among these, the use of a pouch type case is preferable because it can realize a high energy density, allows free design of shape, and is low in required cost.

A positive electrode is formed by laminating a positive electrode material composed mainly of an active material, a binder resin, and a conductive assistant on a current collector. Examples of useful active materials include lithium-containing transition metal oxides having layered structures such as $LiCoO_2$, $LiNiO_2$, and $Li(NiCoMn)O_2$, spinel type manganese oxides such as $LiMn_2O_4$, and iron based compounds such as $LiFePO_4$. It is generally desirable to use a highly oxidation resistant resin as binder resin. Specific examples thereof include fluorine-containing resins, acrylic resins, and styrene-butadiene resins. Useful conductive assistants include carbon materials such as carbon black and graphite. The current collector is preferably in the form of metal foil, and in particular, aluminum foil is used widely.

The negative electrode is formed by laminating a negative electrode material composed mainly of an active material and a binder resin on a current collector. Useful active materials include carbon materials such as artificial graphite, natural graphite, hard carbon, and soft carbon; lithium alloy based materials of tin, silicon, etc.; metal materials such as lithium; and lithium titanate ($Li_4Ti_5O_{12}$). Useful binder resins include fluorine-containing resins, acrylic resins, and styrene-butadiene resins. The current collector is preferably in the form of metal foil, and in particular, copper foil is used widely. However, it is particularly preferable to adopt the current collector according to the present invention.

In the case where the electrical storage element according to the present invention includes an electrolytic solution, the presence of an electrolytic solution serves to provide a space in which ions migrate between the positive electrode and the negative electrode in an electrochemical element such as secondary battery, and it is preferably in the form of an electrolyte substance dissolved in an organic solvent.

Examples of the electrolyte substance include $LiPF_6$, $LiBF_4$, and $LiClO_4$, of which $LiPF_6$ is generally used suitably from the perspective of solubility in organic solvents and ion conductance.

Examples of the organic solvent include ethylene carbonate, propylene carbonate, fluoroethylene carbonate, dimethyl carbonate, diethyl carbonate, and ethylmethyl carbonate, and these organic solvents may be used as a mixture of two or more thereof.

Described below is a method for producing a lithium secondary battery, which has been preferred among the various types of electrical storage elements.

As a method to produce a lithium secondary battery, first an active material and a conductive assistant are dispersed in a binder resin solution to prepare a coating solution for electrode formation and this coating solution is spread over a current collector, followed by drying to remove the solvent. A positive electrode and a negative electrode are formed separately in this way. After the drying step, the resulting coat film preferably has a thickness of 50 μm or more and 500 μm or less. Furthermore, it is preferable to apply pressure to the active material layer formed on the current collector by the roll-press method, for example, to make it denser and to reduce the thickness of the current collector.

A lithium secondary battery separator is interposed between the resulting positive electrode and negative electrode in such a manner that it comes in contact with the active material layer of each electrode, and then they are enclosed in a covering material such as aluminum laminate film. Subsequently, an electrolytic solution is injected, and a negative electrode lead, safety valve, etc. are attached, followed by sealing the covering material.

The lithium secondary battery element produced in this manner is characterized by strong adhesion to the electrodes, good battery properties, and low production cost.

[Secondary battery]

Electrical storage elements formed by the aforementioned method or the like may be used to produce secondary batteries according to a procedure in which a plurality of electrical storage elements are connected in series to meet particular usage requirements for the intended electrical storage elements or required battery capacities. In that case, the resulting secondary batteries preferably include voltage and temperature controllers and safety devices. It is preferable that multiple electrical storage elements be connected together with tab leads (current extraction lines) and housed in module cases made of resin or metal, thereby providing secondary batteries.

[Electric vehicles]

Secondary batteries produced by, for example, the method described above have excellent battery characteristics and durability and incorporate polyester films with a lower specific gravity than metals. This contributes to reduction in weight and increase in gravimetric energy density, and therefore, as a preferred embodiment, they can be mounted on electric vehicles. An electric vehicle is a vehicle that is supplied with power required for traveling entirely or partially by secondary batteries. There are various types of electric vehicles including battery electric vehicles (BEVs) that are equipped with only secondary batteries as well as hybrid electric vehicles (HEVs) and plug-in hybrid electric vehicles (PHEVs) that are equipped with both engines operating on fossil fuel such as gasoline and secondary batteries. The secondary battery according to the present invention can be suitably used for all these vehicles.

[Electric flying object]

Secondary batteries produced by, for example, the method described above have excellent battery characteristics and durability and incorporate polyester films with a lower specific gravity than metals. This contributes to reduction in weight and increase in gravimetric energy density, and therefore, as a preferred embodiment, they can be mounted on electric flying objects. An electric flying object is an object that is supplied with power required for flying entirely or partially by secondary batteries. Specific examples thereof include drones, high altitude platform stations (HAPS), air metros, air taxis, and other electric aircraft. The secondary battery according to the present invention can be suitably used for all these vehicles.

[Methods for evaluation of characteristics]

A. Polymer characteristics

(i) Intrinsic viscosity (IV)

A test sample (polyester resin (raw material) or polyester film) is dissolved in 100 ml of orthochlorophenol (solution concentration C (weight of test sample/volume of solution = 1.2 g/100 ml), and the viscosity of the solution at 25°C is measured using an Ostwald viscometer. The viscosity of the solvent is also measured in a similar way. From the measured solution viscosity and solvent viscosity, the value of [η] is calculated by the equation (1) given below and the value obtained is adopted to represent the overall intrinsic viscosity (IV) of the polyester film.

$$\eta sp/C = [\eta] + K[\eta]^2 \cdot C \qquad (1)$$

(Here, ηsp = (solution viscosity / solvent viscosity) - 1, and K is the Huggins constant (assumed to be 0.343)).

If insoluble matter such as inorganic particles are present in the solution containing the dissolved test sample, the following procedure is carried out to take measurements.

(1-1) A test sample is dissolved in 100 mL of orthochlorophenol to prepare a solution having a concentration of more than 1.2 g/100 mL. Here, the weight of the test sample put in orthochlorophenol is referred to herein as the test sample weight.

(1-2) Next, the solution containing insoluble matter is filtered and then the weight of the insoluble matter and the volume of the filtrate left after filtration are measured.

(1-3) Orthochlorophenol is added to the filtrate left after filtration in such a manner that (test sample weight (g) - insoluble matter weight (g)) / (volume of filtrate left after filtration (mL) + volume of orthochlorophenol added (mL)) is adjusted to 1.2 g/100 mL.

(For example, in the case where a high concentration solution with a test sample weight of 2.0 g and solution volume of 100 mL is prepared and found to give a measured insoluble matter weight of 0.2 g after filtering the solution and a measured filtrate volume of 99 mL after the filtration, an adjustment should be made by adding 51 mL of orthochlorophenol. ((2.0 g - 0.2 g) / (99 mL + 51 mL) = 1.2 g/100 mL))

(1-4) From the solution obtained in the step (1-3), viscosity measurement is performed at 25°C with an Ostwald viscometer and the value of [η] is calculated by the equation (1) given above from the measured solution viscosity and solvent viscosity. The value obtained is adopted to represent the intrinsic viscosity (IV). The intrinsic viscosity of the polyester film measured according to the steps (1-1) to (1-4) is adopted as $IV_F$ (dl/g).

Then, only the surface layer (layer A) and the interlayer (layer B) are taken out from the polyester film, and the intrinsic viscosities of the layer A and the layer B are measured according to the steps (1-1) to (1-4) and adopted as $IV_A$ (dl/g) and $IV_B$ (dl/g), respectively.

B. Film thickness

(i) Thickness of polyester film, T

To determine the overall thickness of the polyester film, 10 sheet-like samples thereof were stacked and the thickness of the stack was measured at five randomly selected locations according to Method A-2 specified in JIS K7130 (1992) using a dial gauge. The average of the measurements taken is divided by 10 to determine the thickness of the polyester film, T (μm).

(ii) Layer thickness ($T_A$, $T_B$, $T_M$)

From the polyester film, a cross-sectional sample is cut out in the parallel direction to the width of the film using a microtome. The cross section is observed by scanning electron microscopy at a magnification of 5,000 to 20,000 times to measure the thickness ratios of the constituent layers (layer A and layer B) of the laminated polyester film and the M layer. The thickness of each layer ($T_A$, $T_B$, $T_M$) is calculated from the thickness ratios measured above and the overall thickness of the film determined in the section (i).

C. Formation of metal layer by vacuum sputtering

Under the following conditions, a copper metal layer with a thickness of 1 μm is formed on the layer A of the polyester film using a high frequency sputtering device.

Sputtering environment: vacuum ($9.0 \times 10^{-3}$ Pa or less)
Target metal: copper
Power output: 500 W

D. Constituent element of M layer

After performing sputter deposition of platinum-palladium on the surface of a laminated polyester film, observation is performed using a scanning electron microscope (JSM-6700, manufactured by JEOL) equipped with an energy dispersive X-ray spectroscopic (EDX) detector (AZtecLiv Standard UltimMax65, manufactured by Oxford Instruments) to identify the metal elements.

Observation is performed at varying accelerating voltages from 0.5 kV to 30 kV, and the elements detected were identified as constituent elements of the aforementioned M layer. In this observation, platinum and palladium were excluded, and if only platinum or palladium is detected throughout all measurements taken at varying accelerating voltages, they are regarded as the constituent element of the M layer.

E. Evaluation of reduction current based on cyclic voltammetry (CV) measurement

(i) Preparation of 2032 type coin cell

A copper metal layer is formed on the surface of the layer A of the polyester film by the method described in the aforementioned paragraph C, and a disk-like sample with a diameter of 16 mm is punched out. On the copper metal layer surface of the punched sample, a polyethylene separator with a diameter of 18 mm, a lithium metal foil with a diameter of 16.1 mm, and two SUS plates are stacked in this order, and sealed with an electrolytic solution as described below to fabricate a 2032 type coin cell. It should be noted that the polyethylene separator has a thickness of 4 μm or more and 20 μm or less and an air permeability of 500 seconds or less.

(Components of electrolytic solution)

- Electrolyte substance: 1 mol/L lithium hexafluorophosphate ($LiPF_6$)
- Solvent: A 1:1 (by volume) liquid mixture of ethylene carbonate (EC) and diethylene carbonate (DEC)
- Preparation environment: Preparation is performed in an argon gas circulation type glove box with a dew point of -70°C or less and an oxygen concentration of 10 ppm by volume or less.

(ii) CV measurement

The 2032 type coin cell prepared in the aforementioned section (i) is subjected to cyclic voltammetry measurement conducted under the following conditions using a VSP instrument manufactured by Biologic. The current value (mA) is observed while performing potential sweep operation and it is divided by the area of the sample used (2.01 $cm^2$) to determine the current per unit area ($mA/cm^2$).

(Measuring conditions)

- Test temperature: 25°C
- Potential sweep range: 0.01 to 2.0 V (vs. $Li^+/Li$)
- Sweep rate: 1 mV/s
- Number of cycles: 10 cycles

(iii) Maximum reduction current peak intensity

The measurements of the current per unit area ($mA/cm^2$) obtained in the aforementioned section (ii) are compared among them, and the one with the largest absolute value is adopted as the maximum reduction current peak intensity ($mA/cm^2$).

E-2. Moisture content ($W_F$)

The moisture contents of the polyester film and polyester resin were measured using a moisture measurement device (AQUACOUNTER AQ-7) and a moisture evaporator (EVAPORATOR UNIT EV-6), both manufactured by HIRANUMA Co., Ltd., according to the Karl Fischer coulometric titration method. The proportion in ppm determined by dividing the measured quantity of water by the mass of the polyester film used as sample is adopted as the moisture content $W_F$ (ppm by mass) of the polyester film.

As reagents for coulometric titration, Aqualyte (registered trademark) RS-A (manufactured by HIRANUMA Co., Ltd.) is used in the generation liquid layer while Aqualyte (registered trademark) CN (manufactured by HIRANUMA Co., Ltd.) is used in the counter electrode liquid layer.

The moisture content of the polyester resin used as raw material for the polyester film is determined in the same manner.

Then, only the layer A and the layer B are taken out from the polyester film, and the moisture content of the layer A and that of the layer B are measured according to the procedure described above and adopted as $W_A$ (ppm by mass) and $W_B$ (ppm by mass), respectively.

F. Evaluation of mechanical characteristics of polyester film

The breaking elongation and the breaking strength of the polyester film are measured. From the polyester film, rectangular samples with a length of 150 mm and a width of 10 mm are cut out in such a manner that the roll unwinding direction is the longitudinal direction of the polyester film while the longitudinal direction coincides with the long side. According to the following method that is specified in ASTM-D882, a film sample with a width of 10 mm is mounted in an Instron type tensile tester (AMF/RTA-100, manufactured by Orientec Co., Ltd.) and tensile test is performed with a chuck-to-chuck distance of 50 mm and a pulling rate of 300 mm/min. The elongation (breaking elongation) and strength (breaking strength) are read at the time of breaking the sample. Five measurements are taken and their average is adopted as the breaking elongation or breaking strength in the longitudinal direction of the polyester film.

As in the case of the measurement in the longitudinal direction, the width direction of the polyester film is defined as the direction that forms an angle of 90° in the plane with the longitudinal direction, and a rectangular sample with a length of 150 mm and a width of 10 mm is cut out in such a manner that the width direction coincides with the long side, followed by measuring the breaking elongation and breaking strength of the sample. Five measurements are taken and their average is adopted as the breaking elongation or breaking strength in the width direction of the polyester film.

In the case where the longitudinal and width directions of the polyester film cannot be identified definitely, measurement of breaking elongation and breaking strength is performed in four directions, namely, one certain direction and other directions that form an in-plane angle of 45°, 90°, or 135° with that direction. The largest one of the measurements of breaking elongation or breaking strength taken in four directions is adopted as the breaking elongation or breaking strength of the polyester film in which the longitudinal and width directions cannot be identified definitely.

G. Adhesion between M layer and polyester film

From a polyester film having an M layer formed on the surface thereof, a rectangular sample with a width of 15 mm and a length of 80 mm is cut out. On the M layer of the sample cut out above, cellophane tape No. 29 (tape width 15 mm), manufactured by Nitto Denko Corporation, is applied as peeling tape and pressed with a 2 kg rubber roller to ensure adhesion. The sample is then conditioned at 23°C and 65% RH for one day.

The conditioned sample is subjected to 180° peel test using a Versatile Peel Analyzer (VPA-2), manufactured by Kyowa Interface Science Co., Ltd., under the following conditions. The surface of the conditioned sample opposite to the taped surface is fixed on the analyzer and the end of the tape is attached to the load cell of the analyzer, followed by performing measurement.

(Peel test conditions)

- Peel angle: 180°
- Tape width: 15 mm
- Peel speed: 25 mm/min
- Initial peel force: 0 N
- Measuring distance: 50 mm

The average peel strength (N/15 mm) over a moving distance of 15 mm to 35 mm is calculated from the measured peel force wave. Measurements are taken from three different samples and their average is adopted as the adhesive strength between the M layer and the polyester film.

H. Quantitative measurement of silicon element

The polyester film is analyzed by ICP atomic emission spectroscopy. In the case where the polyester film has a metal layer, quantitative measurement is performed after removing the metal layer.

<Analysis conditions>

Equipment: ICP atomic emission spectrometer (PS3520 VDDII, manufactured by Hitachi High-Tech Science Corporation)

Sample preparation: The polyester film is weighed in a beaker and subjected to pressurized decomposition first with sulfuric acid and then with nitric acid, and followed by heat ashing. The resulting ash is fused with a mixed flux of sodium carbonate and boric acid and dissolved under heat with dilute nitric acid to adjust the volume to 10 mL. Subsequently, the liquid diluted with dilute nitric acid is subjected to inductively coupled plasma atomic emission spectroscopy to determine the content of silicon element, which is adopted as the content of silicon element present in the polyester film.

(Measuring conditions)

Measuring wavelength: 251.6 nm
High frequency output: 1.2 kW
Plasma gas flow rate: 16 L/min
Auxiliary gas flow rate: 0.5 L/min
Carrier gas flow rate: 0.9 L/min
Photometry height: 12 mm

G-2. Quantitative analysis of resin components in polyester film

A samples for measurement is taken from all layers, layer A, or layer B of the polyester film according to the present invention. The samples for measurement are immersed in 1,1,1,2,2,2-hexafluoro-2-propanol (HFIP), and the soluble fraction is separated by centrifugation. The supernatant is collected to extract the resin components present in the polyester film. The extraction liquid is subjected to measurement by matrix-assisted laser desorption/ionization mass spectrometry (MALDI-MS). The structures of the resin components contained is identified based on the resulting mass spectrum and the spectrum obtained by nuclear magnetic resonance spectroscopy ($^1$H-NMR), which will be described later.

A 50 mg sample is weighed out from all layers, layer A, or layer B of the polyester film according to the present invention, and 2.63 mg of octamethylcyclotetrasiloxane (OMTS) is added as internal standard. Then, 0.7 mL of deuterated 1,1,1,2,2,2-hexafluoro-2-propanol (HFIP-$d_2$) is added to dissolve the soluble components, followed by centrifugation. The supernatant left after centrifugation is collected and subjected to nuclear magnetic resonance spectrometry ($^1$H-NMR). The ratio between the NMR spectral area of the internal standard substance added and the spectral area of the extract is calculated and used to quantitative measurement of the resin components present in the sample.

($^{1}$H-NMR measuring conditions)

Equipment: ECZ-400 (manufactured by JEOL RESONANCE)
Measuring method: single pulse
Measuring frequency: 399.8 MHz
Pulse width: 6.45 s (45 pulse)
Locking solvent: HFIP-$d_2$
Reference for chemical shift: deuterated solvent residual proton (4.41 ppm)
Observation width: Approx. 8,000 Hz (approx. -2 ppm to 18 ppm)
Number of data points: 32,768
Delay time: 30 seconds
Number of times of calculation: 128 times
Measuring temperature: room temperature (21°C)
Specimen rotating speed: 15 Hz

G-3. DSC measurement

In a differential scanning calorimeter (DSC) Thermo Plus Evo2 Series DSC Vesta, manufactured by Rigaku Corporation, a sample of approximately 5 mg of the polyester film according to the present invention or its raw material is placed on an aluminum pan, heated from room temperature to 300°C at a heating rate of 20°C/min, and held there for 5 minutes (1st-run measurement). The temperature of the exothermic peak that is attributed to glass transition is designated as the glass transition temperature (Tg), and the peak temperature of the endothermic peak observed during melting is designated as the melting point (Tm). The average of three measurements is adopted to represent the glass transition temperature (Tg) and the melting point (Tm) of the sample.

In the case where it is difficult to distinguish the small endothermic peak Tmeta that appears immediately before the melting point on the DSC chart of the polyester film according to the present invention, the following measurement is conducted in addition to the aforementioned 1st-run measurement. After heating the sample to 300°C at a heating rate of 20°C/min and holding the temperature for 5 minutes, the sample is rapidly cooled using liquid nitrogen and then heated again to 300°C at a heating rate of 20°C/min (2nd-run measurement). The number of melting peaks and their temperatures are measured. The peak that disappears from the 1st-run measurement is considered to be the small endothermic peak Tmeta that appears immediately before the melting point, and it is excluded from the 1st-run measurement data.

[Methods for evaluation of characteristics for various applications]

A. Vapor deposition processability

Vacuum sputtering of metallic copper is conducted on the surface of the layer A of the polyester film in the same manner as described in the above paragraph "C. Formation of metal layer by vacuum sputtering". Ten polyester film sheets each having a size of 29.7 cm in the longitudinal direction and 21.0 cm in the width direction are prepared and vacuum sputtering is performed on them. Then, their vapor deposition processability is evaluated based on the presence or absence of creases on the metal layer-deposited surface of the polyester film sheets as specified below.

A: Creasing is found in two or less of the ten sheets.
B: Creasing is found in three or more and five or less of the ten sheets.
C: Creasing is found in six or more and eight or less of the ten sheets.
D: Creasing is found in nine or more of the ten sheets.

The polyester film is judged to be acceptable if it is rated as any of A to C, of which A means the best.

B. Evaluation of resin based current collector

(i) Production of resin based current collector

A layered film is prepared by forming an aluminum metal layer or a copper metal layer on both surfaces of a polyester film sheet by vacuum vapor deposition. In this way, a resin based positive electrode current collector and a resin based negative electrode current collector are prepared.

Specifically, a roll of as-produced polyester film is installed in a roll type vacuum vapor deposition apparatus (EWC-060, manufactured by ULVAC, Inc.), and an aluminum ingot is heated by the induction heating vapor deposition method using a carbon crucible to form an aluminum metal layer. In this step, vacuum vapor deposition is performed at an appropriately adjusted conveyance speed and power output so as to form an aluminum metal layer having a thickness of 1 μm. Subsequently, a roll of the polyester film having an aluminum metal layer deposited on one surface thereof is mounted again in the roll type vacuum vapor deposition apparatus (EWC-060, manufactured by ULVAC, Inc.), and an aluminum ingot is heated by the induction heating vapor deposition method using a carbon crucible to form an aluminum metal layer on the other surface of the polyester film opposite to the surface that is covered by the aluminum metal layer deposited previously. In this step, vacuum vapor deposition is performed at an appropriately adjusted conveyance speed and power output so as to form an aluminum metal layer having a thickness of 1 μm. By carrying out the procedure described above, a resin based positive electrode current collector that is composed of a polyester film and aluminum metal layers deposited on both surfaces thereof is produced.

In addition, by carrying out the same procedure described above except for using a copper ingot instead of an aluminum ingot, a resin based negative electrode current collector that is composed of a polyester film and copper metal layers deposited on both surfaces thereof is produced.

(ii) Preparation of positive electrode

First, 94 parts by mass of a nickel-cobalt-manganese composite oxide NMC (Ni:Co:Mn = 6:2:2 in atomic ratio) as the positive electrode active material, 3 parts by mass of carbon black as conductive material, and 3 parts by mass of polyvinylidene fluoride (PVDF) as resin binders are mixed and dispersed in N-methylpyrrolidone (NMP) to prepare slurry. This slurry is uniformly applied to one surface of an aluminum foil having a thickness of 20 μm, which is intended for use as a positive electrode current collector. It is then dried and subjected to compression molding using a roll press machine. In this step, the mixture material for positive electrodes is applied in such a manner that the coating weight on one surface is 170 $g/m^2$ with a density of 3.0 $g/cm^3$, followed by cutting to a size of 28 mm × 44 mm. In the surface, a part with a size of 28 mm × 5 mm is left uncoated for tab connection, leaving a slurry-coated area of 28 mm × 39 mm. An aluminum positive electrode tab is attached to the uncoated area by ultrasonic welding.

(iii) Preparation of negative electrode

First, 97 parts by mass of artificial graphite as negative electrode active material, 1 part by mass of carboxymethyl cellulose and 2 parts by mass of styrene-butadiene copolymer latex as resin binders are mixed and dispersed in purified water to prepare slurry. This slurry is uniformly applied to one surface of a copper foil having a thickness of 10 μm, which is intended for use as a negative electrode current collector, or one surface of a resin based negative electrode current collector. It is then dried and subjected to compression molding using a roll press machine. In this step, the mixture material for negative electrodes is applied in such a manner that the coating weight on one surface is 100 $g/m^2$ with a density of 1.5 $g/cm^3$, followed by cutting to a size of 30 mm × 46 mm. In the surface, a part with a size of 30 mm × 5 mm is left uncoated for tab connection, leaving a slurry-coated area of 30 mm × 41 mm. A copper negative electrode tab is attached to the uncoated area by ultrasonic welding.

(iv) Polyolefin microporous film

There are no particular limitations on the method to use for producing a polyolefin microporous film, and generally known methods for producing polyolefin microporous films can be used. In the examples given herein, polyolefin microporous films are prepared with reference to the method described in Japanese Patent No. 4460028. Each microporous film produced is cut to a size of 38 mm × 49 mm.

(v) Nonaqueous electrolytic solution

In a mixed solvent consisting of ethylene carbonate, ethylmethyl carbonate, and dimethyl carbonate blended in a ratio of 3:3:4 (by volume), $LiPF_6$ is dissolved as a solute to a concentration of 1.0 mol/L. To 100 parts by mass of this solution, 1 part by mass of vinylene carbonate is added to prepare a nonaqueous electrolytic solution.

(vi) Production of evaluation battery

The positive electrode and negative electrode prepared above are used to form a laminated electrode body by staking the positive electrode, polyethylene microporous film, and negative electrode in this order. This laminated electrode body is sandwiched between aluminum laminate film sheets, sealed leaving a part as an opening, dried in a vacuum oven at 80°C for 6 hours, then injected with the aforementioned nonaqueous electrolytic solution, and sealed using a vacuum sealer. Subsequently, in an atmosphere at 35°C, constant current charging is performed to charge it at a current of 6 mA to a battery voltage of 4.2 V and then, constant voltage charging is performed to charge it at a voltage of 4.2 V until the current comes to 3 mA. After a pause of 30 minutes, constant current discharging is performed at a current of 6 mA to a battery voltage of 2.5 V, followed by a pause of 30 minutes. The above charge-discharge cycle is performed three times repeatedly, thereby providing a laminated battery with a battery capacity of 30 mAh.

(vii) Initial resistance of evaluation battery

The evaluation battery fabricated in the aforementioned section (vi) is examined in an atmosphere at 25°C to measure the resistance using Battery HiTester BT3561, manufactured by HIOKI E.E. Corporation, under the condition of an alternating current frequency of 1 kHz.

In the same manner as in the sections (i) to (vi), an evaluation battery that includes an aluminum foil with a thickness of 15 μm as the positive electrode and a copper foil with a thickness of 15 μm as the negative electrode is fabricated, and its initial resistance is measured.

Evaluations are made as described below in terms of R1/R0 (%) that represents the relative ratio in percentage between the initial resistance value of the resulting evaluation battery that includes metal foils, which is designated as R0, and the initial resistance value of the evaluation battery that includes the polyester film according to the present invention, which is designated as R1. For a current collector that incorporates a polyester film, an R1/R0 ratio closer to 100% indicates a smaller initial resistance. Five evaluation batteries are evaluated, and the average value of the measurements is adopted to represent the initial resistance of the sample.

A: $R1/R0_0$ is 103% or less.
B: R1/R0 is more than 103% and 110% or less.
C: R1/R0 is more than 110% and 200% or less.
D: R1/R0 is more than 200%.

The battery is judged to be acceptable in terms of initial resistance if it is rated as any of A to C, of which A means the best.

(viii) Electrolysis resistance

An evaluation battery prepared in the aforementioned section (vi) is tested according to the charge retention procedure described below. For the evaluation battery, constant current charging is performed in an atmosphere at 35°C at a current of 30 mA to a battery voltage of 4.2 V. Then, a constant voltage charged state at 4.2 V is maintained for two weeks (336 hours), followed by a pause of 30 minutes. Subsequently, low current discharging is performed at a current of 30 mA to a battery voltage of 2.5 V, followed by a pause of 30 minutes.

Ten evaluation batteries are fabricated according to the procedure described in the sections (ii) to (vi), subjected to the above processing, and disassembled. The cross-section of each resin based positive electrode current collector or resin based negative electrode current collector is observed under an optical microscope to determine whether the polyester film used in the resin based current collector suffers the formation of voids with an equivalent circle diameter of 1 μm or more.

The presence or absence of voids in the resin based positive electrode current collector or resin negative electrode based current collector of each of the ten evaluation batteries is examined, and evaluations are made as described below.

A: Voids are found in three or less of the ten evaluation batteries after the two week charge retention test.
B: Voids are found in four or more and six or less of the ten evaluation batteries after the two week charge retention test.
C: Voids are found in seven or more and eight or less of the ten evaluation batteries after the two week charge retention test.
D: Voids are found in nine or more of the ten evaluation batteries after the two week charge retention test.

The batteries are judged to be acceptable if they are rated as any of A to C, of which A means the best.

(ix) Discharge capacity retention rate after 500 charge-discharge cycle test

An evaluation battery prepared in the aforementioned section (vi) is charged and discharged as described below.

(Charge-discharge procedure)

Constant current charging is performed in an atmosphere at 35°C to charge it at a current of 30 mA to a battery voltage of 4.2 V and then, constant voltage charging is performed at a constant voltage 4.2 V until the current reaches 6 mA, followed by a pause of 30 minutes. Subsequently, low current discharging is performed at a current of 30 mA until the battery voltage reaches 2.5 V, followed by a pause of 30 minutes. This constitutes one test cycle.

The above charge-discharge cycle is performed 500 times repeatedly, and the discharge capacity is measured in the initial state and after the end of the test of 500 charge-discharge cycles. The ratio of the discharge capacity measured after the end of the test of 500 charge-discharge cycles to the initial discharge capacity, which is designated as the discharge capacity retention rate (%), is calculated, and evaluations are made as described below.

A: The discharge capacity retention rate after the test of 500 charge-discharge cycles is 90% or more.
B: The discharge capacity retention rate after the test of 500 charge-discharge cycles is 85% or more and less than 90%.
C: The discharge capacity retention rate after the test of 500 charge-discharge cycles is 80% or more and less than 85%.
D: The discharge capacity retention rate after the test of 500 charge-discharge cycles is less than 80%.

(x) Impact resistance of battery based on 500 charge-discharge cycle test

Samples are taken from ten different positions of a polyester film having metal layers on both surfaces, and ten evaluation batteries are fabricated as described in the aforementioned sections (i) to (vi). Then, they are subjected to the test of 500 charge-discharge cycles as described in the aforementioned section (ix).

Subsequently, according to the crash test procedure specified in JIS 8715-2 (2019), ten evaluation batteries, which are in a 50% discharged state relative to their rated capacity, are placed on a flat concrete floor. A SUS316 round bar with a diameter of 15.8 mm and a length longer than the maximum dimension of the evaluation battery is placed across the center of the evaluation battery, and a weight of 9.1 kg is dropped onto the round bar from a height of 610 mm. The discharge capacities of the ten evaluation batteries are measured, and their average is calculated. The rate of discharge capacity retention between before and after the drop test is calculated by dividing the average discharge capacity after the drop test by the average discharge capacity before the drop test, and evaluation is performed based on it as described below.

A: The rate of discharge capacity retention between before and after the drop test is 90% or more.
B: The rate of discharge capacity retention between before and after the drop test is 70% or more and less than 90%.
C: The rate of discharge capacity retention between before and after the drop test is 50% or more and less than 70%.
D: The rate of discharge capacity retention between before and after the drop test is less than 50%.

The batteries are judged to be acceptable in terms of impact resistance if they are rated as any of A to C, of which A means the best.

(xi) Heat deformation resistance of battery based on 500 charge-discharge cycle test

Samples are taken from ten different positions of a laminated polyester film having metal layers on both surfaces, and ten evaluation batteries are fabricated as described in the aforementioned sections (i) to (vi). Then, they are subjected to the test of 500 charge-discharge cycles as described in the aforementioned section (ix).

Subsequently, according to the heating test procedure specified in JIS 8715-2 (2019), ten evaluation batteries in a fully charged state are placed in a forced air circulation type constant temperature oven and heated from 25°C to 85°C at a heating rate of 5°C/min. After leaving the evaluation batteries in the oven for 3 hours, they are taken out of the oven, and the discharge capacities of ten evaluation batteries are measured, followed by calculating the average of the measurements. The rate of discharge capacity retention between before and after the heating test is calculated by dividing the average discharge capacity after the heating test by the average discharge capacity before the heating test, and evaluation is performed based on it as described below.

A: The rate of discharge capacity retention between before and after the heating test is 90% or more.
B: The rate of discharge capacity retention between before and after the heating test is 70% or more and less than 90%.
C: The rate of discharge capacity retention between before and after the heating test is 50% or more and less than 70%.

D: The rate of discharge capacity retention between before and after the heating test is less than 50%.

The evaluation batteries are judged to be acceptable in terms of heat deformation resistance if they are rated as any of A to C, of which A means the best.

EXAMPLES

The present invention will now be illustrated with reference to Examples, although the invention should not be construed as being limited thereto.

[Production of polyester-1]

A 1 mole amount of a dicarboxylic acid component composed of 0.95 mole of dimethyl terephthalate (DMT) and 0.05 mole of dimethyl isophthalate was prepared, and 1.9 moles of cyclohexanedimethanol was added thereto. Then, 0.05 part by mass of magnesium acetate tetrahydrate and 0.015 part by mass of phosphoric acid were added to 100 parts by mass of the dicarboxylic acid component, followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-1 which was a copolymerized polycyclohexadimethylene terephthalate resin substantially free of particles. The polyester-1 had a glass transition temperature of 92°C, a melting peak temperature of 285°C, an intrinsic viscosity of 0.95 dl/g, and a moisture content of 1,900 ppm by mass.

[Production of polyester-2]

A 1.9 mole amount of ethylene glycol was added to 1 mole of dimethyl terephthalate (DMT) and then, 0.05 part by mass of magnesium acetate tetrahydrate and 0.015 part by mass of phosphoric acid were added to 100 parts by mass of the dimethyl terephthalate (DMT), followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-2 which was a polyethylene terephthalate resin substantially free of particles. The polyester-2 had a glass transition temperature of 78°C, a melting peak temperature of 255°C, an intrinsic viscosity of 0.70 dl/g, and a moisture content of 4,300 ppm by mass.

[Production of polyester-3]

A 1 mole amount of a dicarboxylic acid component composed of 0.95 mole of dimethyl terephthalate (DMT) and 0.05 mole of dimethyl isophthalate was prepared, and 1.24 mole of cyclohexanedimethanol and 0.66 mole of ethylene diol were added thereto. Then, 0.05 part by mass of magnesium acetate tetrahydrate and 0.015 part by mass of phosphoric acid were added to 100 parts by mass of the dicarboxylic acid component, followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-3 which was substantially free of particles. The polyester-3 was a copolymerized polycyclohexadimethylene terephthalate (PCT) resin that included, as diol components, 67 mol% of the cyclohexanedimethanol component and 33 mol% of the ethylene diol component. The polyester-3, which was produced by properly adjusting the polymerization time, had a glass transition temperature of 84°C, melting peak temperatures of 167°C and 215°C, an intrinsic viscosity of 0.75 dl/g, and a moisture content of 2,100 ppm by mass.

[Production of polyester-4]

A 1.9 mole amount of ethylene glycol was added to 1 mole of dimethyl terephthalate (DMT) and then, 0.05 part by mass of magnesium acetate tetrahydrate and 0.015 part by mass of phosphoric acid were added to 100 parts by mass of the dimethyl terephthalate (DMT), followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-4 which was substantially free of particles. The polyester-4, which was produced by properly adjusting the polymerization time, had a glass transition temperature of 78°C, a melting peak temperatures of 255°C, an intrinsic viscosity of 0.83 dl/g, and a moisture content of 4,300 ppm by mass.

[Production of polyester-5]

A 1 mole amount of a dicarboxylic acid component composed of 0.95 mole of dimethyl terephthalate (DMT) and 0.05 mole of dimethyl isophthalate was prepared, and 0.66 mole of cyclohexanedimethanol and 1.24 mole of ethylene diol were added thereto. Then, 0.05 part by mass of magnesium acetate tetrahydrate and 0.015 part by mass of phosphoric acid were added to 100 parts by mass of the dicarboxylic acid component, followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-5 which was substantially free of particles. The polyester-5 was a copolymerized polyethylene terephthalate resin that included, as diol components, 33 mol% of the cyclohexanedimethanol component and 67 mol% of the ethylene diol component. The polyester-5, which was produced by properly adjusting the polymerization time, had a glass transition temperature of 81°C, a melting peak temperature of 250°C, an intrinsic viscosity of 0.75 dl/g, and a moisture content of 3,900 ppm by mass.

[Production of polyester-6]

Except that a polymerization catalyst including a reaction product of a silicon compound and a phosphorus compound with a titanium compound as described in Example 1 of Japanese Unexamined Patent Publication (Kokai) 2006-299222 was used as the polyester polymerization catalyst, the same procedure as used for the polyester-1 was carried out to provide a polyester-6, which was a copolymerized polycyclohexadimethylene terephthalate resin containing silicon element. The polyester-6 had a glass transition temperature of 83°C, a melting peak temperature of 280°C, an intrinsic viscosity of 0.95 dl/g, and a moisture content of 1,900 ppm by mass.

[Production of polyester-7]

Except that 1.9 moles of ethylene glycol was added to 1 mole of 2,6-dimethylnaphthalate (2,6 DMN), the same procedure as used for the polyester-2 was carried out to provide pellets of a polyester-7, which was a polyethylene naphthalate resin that was substantially free of particles. The polyester-7, which was produced by properly adjusting the polymerization time, had a glass transition temperature of 115°C, a melting peak temperature of 265°C, an intrinsic viscosity of 0.86 dl/g, and a moisture content of 2,200 ppm by mass.

[Production of polyester-8]

Except that 1.9 moles of ethylene glycol was added to a mixture of 0.66 mole of 2,6-dimethylnaphthalate (2,6 DMN) and 0.33 mole of dimethyl terephthalate (DMT), the same procedure as used for the polyester-7 was carried out to provide pellets of a polyester-8 which was substantially free of particles. Here, the polyester-8 was a copolymerized polyethylene terephthalate resin that included, as dicarboxylic acid components, 67 mol% of the 2,6-naphthalenedicarboxylic acid component and 33 mol% of the terephthalic acid component. The polyester-8 had a glass transition temperature of 110°C, a melting peak temperature of 260°C, an intrinsic viscosity of 0.75 dl/g, and a moisture content of 2,400 ppm by mass.

[Production of polyester-9]

Except that 1.9 moles of ethylene glycol was added to a mixture of 0.33 mole of 2,6-dimethylnaphthalate (2,6 DMN) and 0.66 mole of dimethyl terephthalate (DMT), the same procedure as used for the polyester-7 was carried out to provide pellets of a polyester-9 which was substantially free of particles. Here, the polyester-9 was a copolymerized polyethylene terephthalate resin that include, as dicarboxylic acid components, 33 mol% of the 2,6-naphthalenedicarboxylic acid component and 67 mol% of the terephthalic acid component. The polyester-9 had a glass transition temperature of 89°C, a melting peak temperature of 258°C, an intrinsic viscosity of 0.70 dl/g, and a moisture content of 4,000 ppm by mass.

[Production of polyester-10]

A 1 mole amount of a dicarboxylic acid component composed of 0.67 mole of dimethyl terephthalate (DMT) and 0.33 mole of dimethyl isophthalate was prepared and 1.9 moles of cyclohexanedimethanol was added thereto. Then, 0.05 part by mass of magnesium acetate tetrahydrate and 0.015 part by mass of phosphoric acid were added to 100 parts by mass of the dicarboxylic acid component, followed by heating to cause an ester exchange reaction. Subsequently, 0.025 part by mass of antimony trioxide was added, and after raising the temperature by heating, a polycondensation reaction was performed under highly reduced pressure, thereby providing pellets of a polyester-10 which was a copolymerized polycyclohexadimethylene terephthalate resin that was substantially free of particles and had a higher degree of modification with isophthalic acid than the polyester-1. The polyester-10 was an amorphous resin having a glass transition temperature of 86°C, an intrinsic viscosity of 0.72 dl/g, and a moisture content of 1,800 ppm by mass.

(Example 1)

As shown in Tables, the polyester-1 was dried under reduced pressure at 180°C for 2 hours and 30 minutes, fed into an extruder, melt-extruded, filtered through a filter, and cast through a T-die onto a cooling casting roll maintained at 25°C for cooling and solidification by the electrostatic casting method, thereby providing an unstretched film. Under film production conditions as specified in Tables, this unstretched film was sent in the longitudinal direction to a group of stretching rolls heated at 60°C to 120°C, and stretching operations were carried out to stretch it 3.0 times. Thereafter, the uniaxially stretched film was introduced into a tenter, preheated at 90°C, and then stretched 3.5 times in the width direction at a temperature of 100°C to 130°C, followed by heat treatment at 230°C while maintaining a constant length and 4% relaxation treatment in the width direction, thereby providing a biaxially oriented polyester film with a thickness of 5 μm. Evaluations were made as described above and results obtained are shown in Tables.

[Table 1-1]

[Table 1-1]

| | components of polyester film | | | | | | | |
|---|---|---|---|---|---|---|---|---|
| | layer A (surface layer) | | | | | | | |
| | constituent resin 1 | content of constituent resin 1 (mass%) | constituent resin 2 | content of constituent resin 2 (mass%) | number of carbon atoms in dicarboxylic acid component (1) | number of carbon atoms in dicarboxylic acid component (2) | content ratio of dicarboxylic acid component (1) (mol%) | content ratio of dicarboxylic acid component (2) (mol%) |
| Example 1 | polyester-1 | 100 | - | - | 8 | - | 100 | - |
| Example 2 | polyester-1 | 100 | - | - | 8 | - | 100 | - |
| Example 3 | polyester-1 | 100 | - | - | 8 | - | 100 | - |
| Example 4 | polyester-1 | 85 | polyester-3 | 15 | 8 | - | 100 | - |
| Example 5 | polyester-1 | 70 | polyester-3 | 30 | 8 | - | 100 | - |
| Example 6 | polyester-1 | 70 | polyester-3 | 30 | 8 | - | 100 | - |
| Example 7 | polyester-1 | 100 | - | - | 8 | - | 100 | - |
| Example 8 | polyester-6 | 100 | - | - | 8 | - | 100 | - |
| Example 9 | polyester-7 | 100 | - | - | 12 | - | 100 | - |
| Example 10 | polyester-7 | 70 | polyester-8 | 30 | 8 | 12 | 10 | 90 |
| Example 11 | polyester-1 | 100 | - | - | 8 | - | 100 | - |
| Comparative example 1 | polyester-2 | 100 | - | - | 8 | - | 100 | - |

[Table 1-2]

[Table 1-2]

| | components of polyester film | | | |
|---|---|---|---|---|
| | layer A (surface layer) | | | |
| | number of carbon atoms in diol component (1) | number of carbon atoms in diol component (2) | content ratio of diol component (1) (mol%) | content ratio of diol component (2) (mol%) |
| Example 1 | 8 | - | 100 | - |
| Example 2 | 8 | - | 100 | - |
| Example 3 | 8 | - | 100 | - |
| Example 4 | 2 | 8 | 5 | 95 |
| Example 5 | 2 | 8 | 10 | 90 |
| Example 6 | 2 | 8 | 10 | 90 |
| Example 7 | 8 | - | 100 | - |
| Example 8 | 8 | - | 100 | - |
| Example 9 | 2 | - | 100 | - |
| Example 10 | 2 | - | 100 | - |
| Example 11 | 8 | - | 100 | - |
| Comparative example 1 | 2 | - | 100 | - |

[Table 2-1]

[Table 2-1]

| | components of polyester film | | | | | | | |
|---|---|---|---|---|---|---|---|---|
| | layer B (interlayer) | | | | | | | |
| | constituent resin 3 | content of constituent resin 3 (mass%) | constituent resin 4 | content of constituent resin 4 (mass%) | number of carbon atoms in dicarboxylic acid component (1) | number of carbon atoms in dicarboxylic acid component (2) | content ratio of dicarboxylic acid component (1) (mol%) | content ratio of dicarboxylic acid component (2) (mol%) |
| Example 1 | - | - | - | - | - | - | - | - |
| Example 2 | - | - | - | - | - | - | - | - |
| Example 3 | polyester-2 | 100 | - | - | 8 | - | 100 | - |
| Example 4 | polyester-4 | 90 | polyester-5 | 10 | 8 | - | 100 | - |
| Example 5 | polyester-4 | 90 | polyester-5 | 10 | 8 | - | 100 | - |
| Example 6 | polyester-4 | 75 | polyester-5 | 25 | 8 | - | 100 | - |
| Example 7 | - | - | - | - | - | - | - | - |
| Example 8 | - | - | - | - | - | - | - | - |
| Example 9 | polyester-1 | 95 | polyester-10 | 5 | 8 | - | 100 | - |
| Example 10 | polyester-2 | 85 | polyester-9 | 15 | 8 | 12 | 95 | 5 |
| Example 11 | polyester-1 | 95 | polyester-10 | 5 | 8 | - | 100 | - |
| Comparative example 1 | - | - | - | - | - | - | - | - |

[Table 2-2]

[Table 2-2]

| | components of polyester film | | | |
|---|---|---|---|---|
| | layer B (interlayer) | | | |
| | number of carbon atoms in diol component (1) | number of carbon atoms in diol component (2) | content ratio of diol component (1) (mol%) | content ratio of diol component (2) (mol%) |
| Example 1 | - | - | - | - |
| Example 2 | - | - | - | - |
| Example 3 | 2 | - | 100 | - |
| Example 4 | 2 | 8 | 97 | 3 |
| Example 5 | 2 | 8 | 97 | 3 |
| Example 6 | 2 | 8 | 92 | 8 |
| Example 7 | - | - | - | - |
| Example 8 | - | - | - | - |
| Example 9 | 8 | - | 100 | - |
| Example 10 | 2 | - | 100 | - |
| Example 11 | 8 | - | 100 | - |
| Comparative example 1 | - | - | - | - |

[Table 3]

[Table 3]

| | film production conditions | | | | | | | | |
|---|---|---|---|---|---|---|---|---|---|
| | biaxial stretching method | stretching in longitudinal direction | stretching in width direction | heat treatment temperature (°C) | relaxation treatment (%) | layer structure | thickness of polyester film | | |
| | | stretching ratio (times) | stretching ratio (times) | | | | overall layer T (μm) | layer A, $T_A$ (μm) | layer B, $T_B$ (μm) |
| Example 1 | sequential | 3.0 | 3.5 | 230 | 4 | monolayer | 5 | 5 | - |
| Example 2 | sequential | 3.5 | 4.1 | 230 | 4 | monolayer | 2 | 2 | - |
| Example 3 | sequential | 3.0 | 3.5 | 230 | 4 | 3-layer (layer A/layer B/layer A) | 5 | 1 | 3 |
| Example 4 | sequential | 3.6 | 4.5 | 230 | 4 | 3-layer (layer A/layer B/layer A) | 5 | 1 | 3 |
| Example 5 | sequential | 3.6 | 4.5 | 230 | 4 | 3-layer (layer A/layer B/layer A) | 5 | 1 | 3 |
| Example 6 | sequential | 3.6 | 4.5 | 230 | 4 | 3-layer (layer A/layer B/layer A) | 5 | 1 | 3 |
| Example 7 | sequential | 3.0 | 3.5 | 230 | 4 | monolayer | 5 | 5 | - |
| Example 8 | sequential | 3.0 | 3.5 | 230 | 4 | monolayer | 5 | 5 | - |
| Example 9 | sequential | 4.0 | 4.0 | 230 | 1 | monolayer | 5 | 5 | - |
| Example 10 | sequential | 4.0 | 4.0 | 230 | 1 | 3-layer (layer A/layer B/layer A) | 5 | 1 | 3 |
| Example 11 | sequential | 3.4 | 3.8 | 180 | 6 | 3-layer (layer A/layer B/layer A) | 5 | 1 | 3 |
| Comparative example 1 | sequential | 3.0 | 3.5 | 230 | 4 | monolayer | 5 | 5 | - |

[Table 4-1]

[Table 4-1]

| | characteristics of film | | | | | | |
|---|---|---|---|---|---|---|---|
| | intrinsic viscosity IV (dl/g) | | | moisture content W (ppm by mass) | | | silicon element content (ppm by mass) |
| | overall layer $IV_F$ | layer A, $IV_A$ | layer B, $IV_B$ | overall layer $W_F$ | layer A, $W_A$ | layer B, $W_B$ | |
| Example 1 | 0.90 | 0.90 | - | 2000 | 2000 | - | < 10 |
| Example 2 | 0.90 | 0.90 | - | 2000 | 2000 | - | < 10 |
| Example 3 | 0.74 | 0.90 | 0.63 | 3500 | 2000 | 4500 | < 10 |
| Example 4 | 0.82 | 0.87 | 0.79 | 3400 | 2400 | 4000 | < 10 |
| Example 5 | 0.81 | 0.84 | 0.79 | 3200 | 2600 | 4000 | < 10 |
| Example 6 | 0.80 | 0.84 | 0.77 | 3000 | 2600 | 3700 | < 10 |
| Example 7 | 0.90 | 0.90 | - | 2000 | 2000 | - | < 10 |
| Example 8 | 0.90 | 0.90 | - | 2000 | 2000 | - | 50 |
| Example 9 | 0.75 | 0.75 | - | 2300 | 2300 | - | < 10 |
| Example 10 | 0.77 | 0.72 | 0.79 | 3500 | 2600 | 4100 | < 10 |
| Example 11 | 0.88 | 0.90 | 0.89 | 1950 | 2000 | 1850 | < 10 |
| Comparative example 1 | 0.63 | 0.63 | - | 4500 | 4500 | - | < 10 |

[Table 4-2]

[Table 4-2]

| | characteristics of film | | | |
|---|---|---|---|---|
| | mechanical characteristics of film | | | |
| | longitudinal direction | | width direction | |
| | breaking strength (MPa) | breaking elongation (%) | breaking strength (MPa) | breaking elongation (%) |
| Example 1 | 120 | 120 | 150 | 100 |
| Example 2 | 165 | 80 | 180 | 80 |
| Example 3 | 200 | 120 | 210 | 90 |
| Example 4 | 230 | 100 | 255 | 100 |
| Example 5 | 210 | 95 | 230 | 90 |
| Example 6 | 180 | 60 | 195 | 50 |
| Example 7 | 120 | 120 | 150 | 100 |
| Example 8 | 120 | 120 | 150 | 100 |
| Example 9 | 280 | 110 | 310 | 110 |
| Example 10 | 250 | 100 | 270 | 100 |
| Example 11 | 200 | 90 | 190 | 90 |

(continued)

| | characteristics of film | | | |
|---|---|---|---|---|
| | mechanical characteristics of film | | | |
| | longitudinal direction | | width direction | |
| | breaking strength (MPa) | breaking elongation (%) | breaking strength (MPa) | breaking elongation (%) |
| Comparative example 1 | 210 | 120 | 250 | 100 |

[Table 5]

[Table 5]

| | characteristics of film | | | | | |
|---|---|---|---|---|---|---|
| | CV (cyclic voltametry) evaluation | | | | | |
| | metal layer disposed on layer A | | | electric current per unit area measured from 10 cycles of potential sweep operation ($mA/cm^2$) | | maximum reduction current peak strength ($mA/cm^2$) |
| | formed method | metal element | layer thickness $T_M$ ($\mu m$) | minimum value | maximum value | |
| Example 1 | high frequency vacuum sputtering | copper | 1 | -0.0010 | 0.0005 | 0.0010 |
| Example 2 | high frequency vacuum sputtering | copper | 1 | -0.0010 | 0.0005 | 0.0010 |
| Example 3 | high frequency vacuum sputtering | copper | 1 | -0.0010 | 0.0005 | 0.0010 |
| Example 4 | high frequency vacuum sputtering | copper | 1 | -0.0012 | 0.0005 | 0.0012 |
| Example 5 | high frequency vacuum sputtering | copper | 1 | -0.0014 | 0.0005 | 0.0014 |
| Example 6 | high frequency vacuum sputtering | copper | 1 | -0.0018 | 0.0005 | 0.0018 |
| Example 7 | high frequency vacuum sputtering | copper | 1 | -0.0010 | 0.0005 | 0.0010 |

(continued)

| | characteristics of film | | | | | |
|---|---|---|---|---|---|---|
| | CV (cyclic voltametry) evaluation | | | | | |
| | metal layer disposed on layer A | | | electric current per unit area measured from 10 cycles of potential sweep operation (mA/cm$^2$) | | maximum reduction current peak strength (mA/cm$^2$) |
| | formed method | metal element | layer thickness $T_M$ (μm) | minimum value | maximum value | |
| Example 8 | high frequency vacuum sputtering | copper | 1 | -0.0110 | 0.0005 | 0.0110 |
| Example 9 | high frequency vacuum sputtering | copper | 1 | -0.0066 | 0.0005 | 0.0066 |
| Example 10 | high frequency vacuum sputtering | copper | 1 | -0.0065 | 0.0005 | 0.0065 |
| Example 11 | high frequency vacuum sputtering | copper | 1 | -0.0010 | 0.0005 | 0.0010 |
| Comparative example 1 | high frequency vacuum sputtering | copper | 1 | -0.0600 | 0.0150 | 0.0600 |

Using metal species as shown in Tables, metal layers were formed by vacuum deposition on both surfaces of each polyester film obtained above in such a manner that the metal layer had a thickness as specified in Tables, thereby producing a resin based positive electrode current collector and a resin based negative electrode current collector. Evaluations were made as described above and results obtained are shown in Tables.

[Table 6]

[Table 6]

| | components of film for resin based current collector | | | | | | | |
|---|---|---|---|---|---|---|---|---|
| | layer made of metal and/or metal based compound (M layer) | | | | | | | |
| | M layer formation method | layer structure | resin based positive electrode current collector | | | resin based negative electrode current collector | | |
| | | | metal species | thickness (μm) | adhesion between M layer and polyester film (N/15mm) | metal species | thickness (μm) | adhesion between M layer and polyester film (N/15mm) |
| Example 1 | vacuum deposition | M layer/P1 layer/M layer | aluminum | 1 | 3.7 | copper | 1 | 3.2 |
| Example 2 | vacuum deposition | M layer/P1 layer/M layer | aluminum | 1 | 3.7 | copper | 1 | 3.2 |
| Example 3 | vacuum deposition | M layer/P1 layer/P 2 layer/P1 layer/M layer | aluminum | 1 | 1.5 | copper | 1 | 1.3 |
| Example 4 | vacuum deposition | M layer/P1 layer/P 2 layer/P1 layer/M layer | aluminum | 1 | 2.3 | copper | 1 | 2.1 |
| Example 5 | vacuum deposition | M layer/P1 layer/P 2 layer/P1 layer/M layer | aluminum | 1 | 3.0 | copper | 1 | 3.1 |
| Example 6 | vacuum deposition | M layer/P1 layer/P 2 layer/P1 layer/M layer | aluminum | 1 | 3.5 | copper | 1 | 3.7 |
| Example 7 | vacuum deposition | M layer/P1 layer/M layer | aluminum | 2 | 3.7 | copper | 2 | 3.2 |
| Example 8 | vacuum deposition | M layer/P1 layer/M layer | aluminum | 1 | 3.7 | copper | 1 | 3.2 |

(continued)

| | components of film for resin based current collector | | | | | | | |
|---|---|---|---|---|---|---|---|---|
| | layer made of metal and/or metal based compound (M layer) | | | | | | | |
| | M layer formation method | layer structure | resin based positive electrode current collector | | | resin based negative electrode current collector | | |
| | | | metal species | thickness (µm) | adhesion between M layer and polyester film (N/15mm) | metal species | thickness (µm) | adhesion between M layer and polyester film (N/15mm) |
| Example 9 | vacuum deposition | M layer/P1 layer/M layer | aluminum | 1 | 4.1 | copper | 1 | 4.0 |
| Example 10 | vacuum deposition | M layer/P1 layer/P 2 layer/P1 layer/M layer | aluminum | 1 | 3.8 | copper | 1 | 3.5 |
| Example 11 | vacuum deposition | M layer/P1 layer/P11 layer/P1 layer/M layer | aluminum | 1 | 3.7 | copper | 1 | 3.2 |
| Comparative example 1 | vacuum deposition | M layer/P1 layer/M layer | aluminum | 1 | 4.0 | copper | 1 | 3.7 |

[Table 7]

[Table 7]

| | production suitability | evaluation | | | | | |
|---|---|---|---|---|---|---|---|
| | deposition processability | initial resistance of evaluation battery | electrolysis resistance | | properties after 500 charge-discharge cycle test | | |
| | | | resin based positive electrode current collector | resin based negative electrode current collector | discharge capacity retention rate | impact resistance of battery | heat deformation resistance of battery |
| Example 1 | A | B | A | A | A | C | A |
| Example 2 | C | B | A | A | A | B | B |
| Example 3 | A | B | A | A | A | C | C |
| Example 4 | A | B | A | A | A | B | B |

(continued)

| | production suitability | evaluation | | | | | |
|---|---|---|---|---|---|---|---|
| | | | electrolysis resistance | | properties after 500 charge-discharge cycle test | | |
| | deposition processability | initial resistance of evaluation battery | resin based positive electrode current collector | resin based negative electrode current collector | discharge capacity retention rate | impact resistance of battery | heat deformation resistance of battery |
| Example 5 | A | B | A | A | A | A | B |
| Example 6 | A | B | A | A | A | B | C |
| Example 7 | C | A | A | A | A | C | A |
| Example 8 | A | B | A | C | C | C | B |
| Example 9 | A | B | A | B | B | A | A |
| Example 10 | A | B | A | B | B | A | A |
| Example 11 | A | B | A | A | A | A | A |
| Comparative example 1 | A | B | A | D | D | D | D |

(Example 2)

Except that the polyester film thickness was smaller than in Example 1 as shown in Tables, the same procedure as in Example 1 was carried out to produce a polyester film and make evaluations.

(Example 3)

A polyester film was produced and evaluations were made in the same manner as in Example 1 except that the resulting polyester film had a three layer structure including a layer B made of the polyester-2, which was PET, as shown in Tables.

(Example 4)

A polyester film was produced and evaluations were made in the same manner as in Example 3 except that the polyester film was formed under the film forming conditions described in Tables and configured to have three layers made of the polyester-2, which was PET, the polyester-3, which was a copolymerized PCT component, and the polyester-4, which was a copolymerized PET component.

(Examples 5 and 6)

A polyester film was produced and evaluations were made in the same manner as in Example 4 except that the polyester film was formed under the film forming conditions described in Tables and configured to have three layers made of the polyester-2, which was PET, the polyester-3, which was copolymerized PCT, and the polyester-4, which was copolymerized PET, wherein they were used in altered proportions.

(Example 7)

A polyester film was produced in the same manner as in Example 1 except that the metal layer formed on the layer A had a larger thickness of 2 μm as specified in Tables. Evaluations were made in the same manner.

(Example 8)

A polyester film was produced and evaluations were made in the same manner as in Example 1 except that the resulting polyester film had a structure as shown in Tables and was made of the polyester-6, which was a PCT resin produced with a silicon catalyst.

(Examples 9 and 10)

In Example 9, a polyester film was produced and evaluations were made in the same manner as in Example 1 except that the resulting polyester film had a structure as shown in Tables and was made of the polyester-7, which was a PEN resin, and that film-forming conditions used were as shown in Tables. In Example 10, the polyester film structure was as shown in Table wherein the layer A was made of the polyester-8 while the layer B was made of the polyester-2 and the polyester-9. Except that the longitudinal stretching temperature was adjusted appropriately in the range of 100°C to 145°C while the transverse stretching temperature was adjusted appropriately in the range of 100°C to 140°C and that film-forming conditions used were as shown in Tables, a polyester film was produced and evaluations were made in the same manner as in Example 1.

(Example 11)

In Example 11, a polyester film was produced and evaluations were made in the same manner as in Example 1 except that the polyester film was produced under the film formation conditions shown in Tables and had a structure as shown in Tables wherein the layer A contained the polyester-1, which was a PCT resin, as main component while the layer B, which was prepared by mixing the polyester-1 and the polyester-10, contained a PCT resin with a larger isophthalic acid content than the layer A.

(Comparative example 1)

A polyester film was produced and evaluations were made in the same manner as in Example 1 except that the constituent components of the resulting polyester film were as shown in Tables and that the polyester-2, which was PET, was used as raw material.

EXPLANATION OF NUMERALS

1. Vertical axis representing the current per unit area observed in CV measurement
2. Horizontal axis representing the applied potential with respect to the redox potential of lithium metal, adopted as reference 0 V, in CV measurement
3. A curve obtained by plotting the current per unit area against the applied potential observed in CV measurement
4. Current peak where the current observed in CV measurement reaches its minimum
5. Current peak in the region where the current observed in CV measurement reaches its maximum
6. Current value having the largest absolute value observed in CV measurement (maximum reduction current peak intensity)

## Claims

**1.** A current collector comprising a layer made of a metal and/or a metal based compound (M layer) and a polyester film and exhibiting a maximum reduction current peak intensity of 0.000 mA/cm$^2$ or more and 0.050 mA/cm$^2$ or less in CV measurement (0.01 V to 2.0 V, 10 cycles), <procedure of CV measurement>
CV measurement is performed in the steps (i) to (iii) described below to determine the maximum reduction current peak intensity,

(i) preparation of 2032 type coin cell

a sample is prepared by forming a copper metal layer by sputtering on one surface of a current collector and then punching out a disk with a diameter of 16 mm, on the surface of the copper metal layer of the punched sample, a polyethylene separator with a diameter of 18 mm, a metallic lithium foil with a diameter of 16.1 mm, and two stainless steel plates (SUS304) are stacked in this order, and sealed with an electrolytic solution as described below to fabricate a 2032 type coin cell, during this procedure, the other surface of the current collector, which is opposite to the surface covered by the polyethylene separator, is maintained in contact with the casing of the 2032 type coin cell,
(components of electrolytic solution)

- electrolyte substance: 1 mol/L lithium hexafluorophosphate ($LiPF_6$)
- solvent: a 1:1 (by volume) liquid mixture of ethylene carbonate (EC) and diethylene carbonate (DEC)
- preparation environment: preparation is performed in an argon gas circulation type glove box with a dew point of -70°C or less and an oxygen concentration of 10 ppm by volume or less,

(ii) CV measurement
the 2032 type coin cell prepared in the aforementioned step (i) is subjected to cyclic voltammetry measurement conducted under the following conditions using a VSP instrument manufactured by Biologic, the current value (mA) is observed while performing potential sweep operation assuming that the redox potential of lithium metal is 0 V as reference, and it is divided by the sample area (2.01 $cm^2$) to determine the current per unit area ($mA/cm^2$),
(measuring conditions)

- test temperature: 25°C
- potential sweep range: 0.01 to 2.0 V (vs. $Li^+/Li$)
- sweep rate: 1 mV/s
- number of cycles: 10 cycles,

(iii) maximum reduction current peak intensity
the measurements of the current per unit area ($mA/cm^2$) obtained in the aforementioned step (ii) are compared among them, and the one with the largest absolute value is adopted as the maximum reduction current peak intensity ($mA/cm^2$).

**2.** A current collector as set forth in claim 1, comprising at least one layer that contains, as main component, a polyester resin (resin α) incorporating a dicarboxylic acid component and a diol component having 3 or more and 16 or less carbon atoms.

**3.** A current collector as set forth in either claim 1 or 2, wherein M layers are present on both surfaces of the polyester film.

**4.** A current collector as set forth in either claim 1 or 2, wherein M layers are present on both surfaces of the polyester film and at least the M layer on either surface contains copper element.

**5.** A current collector as set forth in claim 2, wherein M layers are present on both surfaces of the polyester film; at least the M layer on either surface contains copper element; and the layer containing copper element is in contact with the layer containing the resin α as main component.

**6.** A current collector as set forth in claim 1, comprising at least one layer that contains, as main component, a polyester resin (resin β) incorporating a diol component and a dicarboxylic acid component having 9 or more and 16 or less carbon atoms.

**7.** A current collector as set forth in claim 6, wherein M layers are present on both surfaces of the polyester film; at least the M layer on either surface contains copper element; and the layer containing copper element is in contact with the layer containing the resin β as main component.

**8.** A current collector satisfying the requirements (1) and (2) given below:

(1) at least one surface layer of the polyester film is a layer (P1 layer) that contains, as main component, a polyester resin (resin α) incorporating a dicarboxylic acid component and a diol component having 3 or more and 16 or less carbon atoms or contains, as main component, a polyester resin (resin β) incorporating a diol component and a dicarboxylic acid component having 9 or more and 16 or less carbon atoms; and
(2) layers (M layers) each containing a metal and/or a metal based compound are present on both surfaces of the polyester film.

9. A current collector as set forth in claim 8, wherein at least the M layer on either surface is in contact with the P1 layer, and the M layer in contact with the P1 layer is a layer containing copper element.

10. A current collector as set forth in either claim 1 or 8, wherein the thickness of the M layer is 0.1 μm or more and 5.0 μm or less.

11. A current collector as set forth in either claim 1 or 8, wherein the main component of the polyester film is any one of polycyclohexadimethylene terephthalate, polybutylene terephthalate, and polyethylene naphthalate.

12. A current collector as set forth in claim 11, wherein the main component of the polyester film is either polycyclohexadimethylene terephthalate or polybutylene terephthalate.

13. A current collector as set forth in either claim 1 or 8, wherein the polyester film comprises a layer (P1 layer) that contains, as main component, a polyester resin (resin α) incorporating a dicarboxylic acid component and a diol component having 3 or more and 16 or less carbon atoms or contains, as main component, a polyester resin (resin β) incorporating a diol component and a dicarboxylic acid component having 9 or more and 16 or less carbon atoms and further comprises a resin layer (P2 layer) that does not contain, as main component, a resin α or a resin β.

14. A current collector as set forth in either claim 1 or 8, wherein M layers are present on both surfaces of the polyester film and, on each surface, the adhesion strength between the surface of the polyester film and the M layer is 2 N/15 mm or more and 5 N/15 mm or less.

15. A current collector as set forth in either claim 1 or 8, wherein the breaking strength is 150 MPa or more and 400 MPa or less in at least either of the longitudinal direction and width direction in the film plane.

16. A current collector as set forth in either claim 1 or 8, wherein the breaking elongation is 35% or more and 150% or less in at least either of the longitudinal direction and width direction in the film plane.

17. A current collector as set forth in either claim 1 or 8, wherein the polyester film has a silicon element content of 0 ppm by mass or more and 10 ppm by mass or less as determined by subjecting the polyester film to inductively coupled plasma atomic emission spectroscopy (ICP-AES) under the conditions described below:

<analytical conditions>
equipment: ICP atomic emission spectrometer (PS3520 VDDII, manufactured by Hitachi High-Tech Science Corporation)
sample preparation: weighing the current collector in a beaker, carrying out pressurized decomposition first with sulfuric acid and then with nitric acid, and performing heat-ashing; fusing the resulting ash with a mixed flux of sodium carbonate and boric acid and dissolving it under heat with dilute nitric acid to adjust the volume to 10 mL; and subsequently, diluting the liquid with dilute nitric acid, and subjecting it to inductively coupled plasma atomic emission spectroscopy to determine the content of silicon element, which is adopted as the content of silicon element present in the polyester film,
(measuring conditions)
measuring wavelength: 251.6 nm
high frequency output: 1.2 kW
plasma gas flow rate: 16 L/min
auxiliary gas flow rate: 0.5 L/min
carrier gas flow rate: 0.9 L/min
photometry height: 12 mm.

18. A polyester film exhibiting a maximum reduction current peak intensity of 0.000 $mA/cm^2$ or more and 0.050 $mA/cm^2$ or less in CV measurement,

<procedure of CV measurement>
CV measurement is performed in the steps (i) to (iii) described below to determine the maximum reduction current peak intensity,

(i) preparation of 2032 type coin cell

forming copper metal layers by sputtering on both surfaces of the polyester film, and then punching out a disk-like sample with a diameter of 16 mm, placing a polyethylene separator with a diameter of 18 mm, a lithium metal foil with a diameter of 16.1 mm, and two stainless steel plates (SUS304) in this order on either surface of the copper metal layer of the punched sample, and sealing them with an electrolytic solution as described below to fabricate a 2032 type coin cell, during in this procedure, maintaining the other surface of the copper metal layer, which is opposite to the surface covered by the aforementioned polyethylene separator, in contact with the casing of the 2032 type coin cell,
(components of electrolytic solution)

- electrolyte substance: 1 mol/L lithium hexafluorophosphate ($LiPF_6$)
- solvent: a 1:1 (by volume) liquid mixture of ethylene carbonate (EC) and diethylene carbonate (DEC)
- preparation environment: preparation is performed in an argon gas circulation type glove box with a dew point of -70°C or less and an oxygen concentration of 10 ppm by volume or less,

(ii) CV measurement

the 2032 type coin cell prepared in the aforementioned step (i) is subjected to cyclic voltammetry measurement conducted under the following conditions using a VSP instrument manufactured by Biologic, the current value (mA) is observed while performing potential sweep operation assuming that the redox potential of lithium metal is 0 V as reference, and it is divided by the sample area (2.01 $cm^2$) to determine the current per unit area ($mA/cm^2$), (measuring conditions)

- test temperature: 25°C
- potential sweep range: 0.01 to 2.0 V (vs. $Li^+/Li$)
- sweep rate: 1 mV/s
- number of cycles: 10 cycles,

(iii) maximum reduction current peak intensity
the measurements of the current per unit area ($mA/cm^2$) obtained in the aforementioned step (ii) are compared among them, and the one with the largest absolute value is adopted as the maximum reduction current peak intensity ($mA/cm^2$).

**19.** A polyester film as set forth in claim 18, comprising at least one layer that contains, as main component, a polyester resin (resin $\alpha$) incorporating a dicarboxylic acid component and a diol component having 3 or more and 16 or less carbon atoms.

**20.** A polyester film as set forth in claim 18, comprising at least one layer that contains, as main component, a polyester resin (resin $\beta$) incorporating a diol component and a dicarboxylic acid component having 9 or more and 16 or less carbon atoms.

**21.** A polyester film as set forth in either claim 18 or 19, wherein the thickness of the polyester film is 1 $\mu$m or more and 30 $\mu$m or less.

**22.** A negative electrode current collector as set forth in either claim 1 or 8.

**23.** An electrical storage element comprising a current collector as set forth in either claim 1 or 8.

**24.** An electrical storage element comprising a negative electrode current collector as set forth in claim 22 and a negative electrode active material layer disposed on at least either surface thereof.

**25.** An electrical storage element having a structure comprising two or more laminated layers, each of the laminated layers containing a negative electrode current collector as set forth in claim 22, an electrolyte, a positive electrode current collector, and an electrolyte stacked in this order.

**26.** A secondary battery comprising an electrical storage element as set forth in claim 23.

**27.** An electric vehicle equipped with a secondary battery as set forth in claim 26.

**28.** An electric flying object equipped with a secondary battery as set forth in claim 26.

1
Current
(mA)
0
-0.1
2
Voltage (v.s.Li+/Li)
(V)
0
2
3
4
5
6

Figure 1

**INTERNATIONAL SEARCH REPORT**

International application No. **PCT/JP2024/006463**

**A. CLASSIFICATION OF SUBJECT MATTER**

***H01M 4/66***(2006.01)i; ***B32B 27/36***(2006.01)i; ***C08J 5/18***(2006.01)i; ***H01G 9/048***(2006.01)i; ***H01G 11/68***(2013.01)i
FI: H01M4/66 A; H01G11/68; H01G9/048 Z; B32B27/36; C08J5/18 CFD

According to International Patent Classification (IPC) or to both national classification and IPC

**B. FIELDS SEARCHED**

Minimum documentation searched (classification system followed by classification symbols)

H01M4/66; B32B27/36; C08J5/18; H01G9/048; H01G11/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 115692727 A (YANGZHOU NANOPORE INNOVATIVE MATERIAL TECHNOLOGY LTD.) 03 February 2023 (2023-02-03) paragraphs [0002], [0016], [0034]-[0036], [0064], [0068], [0096] | 8-12, 15-16, 22-28 |
| A | | 1-7, 13-14, 17-21 |
| X | CN 111276701 A (JINGMEN NUOWEIYING NEW MATERIALS TECHNOLOGY CO., LTD.) 12 June 2020 (2020-06-12) paragraphs [0007], [0012]-[0014] | 8, 10-12, 22-28 |
| A | | 1-7, 9, 13-21 |
| X | CN 114824290 A (YANGZHOU NANOPORE INNOVATIVE MATERIAL TECHNOLOGY LTD.) 29 July 2022 (2022-07-29) paragraphs [0002], [0011], [0018], [0040], [0063] | 8-12, 15-16, 22-28 |
| A | | 1-7, 13-14, 17-21 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 May 2024** | **21 May 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
**PCT/JP2024/006463**

**C. DOCUMENTS CONSIDERED TO BE RELEVANT**

| Category* | Citation of document, with indication, where appropriate, of the relevant passages | Relevant to claim No. |
|---|---|---|
| X | CN 114927700 A (YANGZHOU NANOPORE INNOVATIVE MATERIAL TECHNOLOGY LTD.) 19 August 2022 (2022-08-19) paragraphs [0034], [0035], [0039], [0040], [0059] | 8, 10-12, 14-16 |
| A | | 1-7, 9, 13, 17-28 |

Form PCT/ISA/210 (second sheet) (July 2022)

**INTERNATIONAL SEARCH REPORT**
**Information on patent family members**

International application No.
**PCT/JP2024/006463**

| Patent document cited in search report | Publication date (day/month/year) | Patent family member(s) | Publication date (day/month/year) |
|---|---|---|---|
| CN 115692727 A | 03 February 2023 | (Family: none) | |
| CN 111276701 A | 12 June 2020 | (Family: none) | |
| CN 114824290 A | 29 July 2022 | WO 2023/216348 A1 | |
| CN 114927700 A | 19 August 2022 | WO 2024/000804 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015005116 A
- JP 2020102386 A
- JP 2020068085 A
- JP 4460028 B
- JP 2006299222 A